(19) Europäisches Patentamt / European Patent Office / Office européen des brevets

(11) **EP 4 763 904 A1**

(12) **EUROPÄISCHE PATENTANMELDUNG**

(43) Veröffentlichungstag:
**24.06.2026 Patentblatt 2026/26**

(21) Anmeldenummer: **24222341.0**

(22) Anmeldetag: **20.12.2024**

(51) Internationale Patentklassifikation (IPC):
**C08K 5/00** *(2006.01)* **C08K 5/101** *(2006.01)*
**C08K 5/12** *(2006.01)* **C08J 3/18** *(2006.01)*
**C08J 5/00** *(2006.01)* **C08J 11/00** *(2006.01)*
**A41D 19/00** *(2006.01)*

(52) Gemeinsame Patentklassifikation (CPC):
(C-Sets verfügbar)
**C08K 5/0016; C08J 3/18; C08J 5/00; C08J 11/02;
C08K 5/101; C08K 5/12; C08L 27/06;**
C08J 2327/06 (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **BASF SE**
**67056 Ludwigshafen am Rhein (DE)**

(72) Erfinder:
• **GRIMM, Axel**
  **67056 Ludwigshafen am Rhein (DE)**
• **WITZEL, Sina**
  **67056 Ludwigshafen am Rhein (DE)**
• **PFEIFFER, Matthias**
  **67056 Ludwigshafen am Rhein (DE)**
• **MORGENSTERN, Herbert**
  **67056 Ludwigshafen am Rhein (DE)**
• **KOLB, Silke**
  **67056 Ludwigshafen am Rhein (DE)**

(74) Vertreter: **Altmann Stößel Dick Patentanwälte
PartG mbB
Isartorplatz 1
80331 München (DE)**

(54) **VERFAHREN ZUR UMESTERUNG EINER WEICHMACHERMISCHUNG**

(57) Ein erster Aspekt der Erfindung betrifft ein Verfahren zur Umesterung einer Weichmachermischung. In einem zweiten Aspekt betrifft die Erfindung einen kombinierten Prozess umfassend (A) Weichmacherextraktion aus einem polymeren Material unter Erhalt einer Mischung von Weichmachern (M1), umfassend einen Phthalsäure-basierten Weichmacher und mindestens einen Weichmacher, der auf einer von Phthalsäure unterschiedlichen Säure basiert; und (B) Umesterung der aus (A) erhaltenen Mischung von Weichmachern (M1). Ein dritter Aspekt der Erfindung bezieht sich auf eine Mischung aus Estern eines Alkohols $C_nH_{2n+1}OH$ (A), wobei n ein Integer aus dem Bereich von 9 bis 15 ist, mit Phthalsäure und Estern des Alkohols A mit einer von Phthalsäure unterschiedlichen Säure, und ein vierter Aspekt der Erfindung betrifft die Verwendung der Mischung gemäß des dritten Aspekts der Erfindung als Weichmacher in der Herstellung polymerer Materialien. Gemäß eines fünften Aspekts betrifft die Erfindung eine Methode zur Herstellung eines Weichmacher enthaltenden polymeren Materials, und ein sechster Aspekt der Erfindung betrifft eine Methode zur Herstellung eines Weichmacher enthaltenden Plastisols. In einem siebten Aspekt bezieht sich die Erfindung auf ein polymeres Material enthaltend ein Polymer und eine Mischung gemäß des zweiten Aspekts der Erfindung als Weichmacher, und ein achter Aspekt der Erfindung betrifft ein Plastisol enthaltend ein Polymer und eine Mischung gemäß des zweiten Aspekts der Erfindung als Weichmacher.

EP 4 763 904 A1

(52) Gemeinsame Patentklassifikation (CPC): (Forts.)

C-Sets
**C08K 5/101, C08L 27/06;**
**C08K 5/12, C08L 27/06**

**Beschreibung**

Ein erster Aspekt der Erfindung betrifft ein Verfahren zur Umesterung einer Weichmachermischung. In einem zweiten Aspekt betrifft die Erfindung einen kombinierten Prozess umfassend (A) Weichmacherextraktion aus einem polymeren Material unter Erhalt einer Mischung von Weichmachern (M1), umfassend einen Phthalsäure-basierten Weichmacher und mindestens einen Weichmacher, der auf einer von Phthalsäure unterschiedlichen Säure basiert; und (B) Umesterung der aus (A) erhaltenen Mischung von Weichmachern (M1). Ein dritter Aspekt der Erfindung bezieht sich auf eine Mischung aus Estern eines Alkohols $C_nH_{2n+1}OH$ (A), wobei n ein Integer aus dem Bereich von 9 bis 15 ist, mit Phthalsäure und Estern des Alkohols A mit einer von Phthalsäure unterschiedlichen Säure, und ein vierter Aspekt der Erfindung betrifft die Verwendung der Mischung gemäß des dritten Aspekts der Erfindung als Weichmacher in der Herstellung polymerer Materialien. Gemäß eines fünften Aspekts betrifft die Erfindung eine Methode zur Herstellung eines Weichmacher enthaltenden polymeren Materials, und ein sechster Aspekt der Erfindung betrifft eine Methode zur Herstellung eines Weichmacher enthaltenden Plastisols. In einem siebten Aspekt bezieht sich die Erfindung auf ein polymeres Material enthaltend ein Polymer und eine Mischung gemäß des zweiten Aspekts der Erfindung als Weichmacher und ein achter Aspekt der Erfindung betrifft ein Plastisol enthaltend ein Polymer und eine Mischung gemäß des zweiten Aspekts der Erfindung als Weichmacher.

In zunehmendem Masse steht die Industrie vor der Herausforderung, Weichmacherhaltige polymere Materialien zu recyclen. Dazu ist es notwendig, die in den Formulierungen enthaltenen Weichmacher und weitere Komponenten aus dem polymeren Material, beispielsweise aus Weich-PVC, zu extrahieren. Dies kann geschehen mit Hilfe von verschiedenen Lösungsmitteln bzw. Fällungsmitteln. Beispielsweise beschreibt WO 2024/133395 A1 die Extraktion von Weichmachern aus polymeren Materialien.

Erhalten werden so Gemische verschiedenster Weichmacher in unterschiedlichen Konzentrationen. Bedingt durch die teilweise lange Lebensdauer der zu extrahierenden polymeren Materialien (beispielsweise Fußböden, Dachbahnen etc.) kommt es häufig vor, dass in Europa nicht mehr zugelassene Weichmacher im Gemisch enthalten sind. Dies können unter anderem sein Diethylhexylphthalat (DEHP), Diisobutylphthalat (DIBP), und Dibutylphthalat (DBP).

Die Extraktion reiner Weichmacher ist generell bekannt und wird beispielsweise von Wagner et al. beschrieben (S. Wagner, M. Schlummer, Resources, Conservation & Recycling 211 (2024) 107889). Die Extraktion reiner Weichmacher und deren Verwendung beispielsweise in einer Umesterung ist ebenfalls generell bekannt und wird beispielsweise für Phthalate beschrieben in WO 2022/243042 A1, WO 2022/243043 A1 und in WO 2024/104887 A1.

Gemische, die nicht nur einen reinen Weichmacher, sondern vielmehr Mischungen diverser Weichmacher enthalten, gestalten sich hingegen problematisch. Allerdings sind Gemische aufgrund der sich ändernden Zusammensetzungen von in polymeren Materialien enthaltenen Weichmachern bereits heutzutage üblich und werden in Zukunft noch in größerem Umfang zu erwarten sein. Insbesondere Mischungen von Phthalsäure-basierten Weichmachern in Verbindung mit davon abweichenden Weichmachern sind daher für Extraktion und Recycling von großem Interesse.

Die der vorliegenden Erfindung zugrunde liegende objektive technische Aufgabe war daher die Bereitstellung eines Verfahrens, welches die Weiterverarbeitung und das Recycling derartiger Mischungen ermöglicht.

Die Aufgabe wurde gemäß eines ersten Aspektes der Erfindung gelöst mittels eines Verfahrens zur Umesterung einer Weichmachermischung, welches umfasst:

(a) Bereitstellen einer ersten Mischung von Weichmachern (M1), umfassend einen Phthalsäure-basierten Weichmacher und mindestens einen Weichmacher, der auf einer von Phthalsäure unterschiedlichen Säure basiert;
(b) Bereitstellen eines Alkohols $C_nH_{2n+1}OH$ (A), wobei n ein Integer aus dem Bereich von 9 bis 15 ist;

(i) Kontaktieren der Mischung von Weichmachern M1 gemäß (a) mit dem Alkohol A gemäß (b) in Gegenwart eines Umesterungskatalysators unter Bedingungen, die eine Umesterung der in der Mischung M1 enthaltenen Weichmacher erlauben, unter Erhalt einer zweiten Mischung von Weichmachern (M2), wobei die Zusammensetzung von M2 und die Zusammensetzung von M1 unterschiedlich sind.

Überraschenderweise konnte gezeigt werden, dass trotz des Vorliegens einer Mischung unterschiedlicher Weichmacher (M1) deren Umesterung nahezu quantitativ möglich war (>99%) und dass die erhaltene Mischung von Weichmachern (M2) bei Verwendung als Weichmacher in neuen polymeren Produkten Eigenschaften aufwies, die denen polymere Produkte, welche mit einer direkt aus den einzelnen Weichmachern, die in der Mischung M2 enthalten waren, erzeugt worden waren, gleichwertig waren im Hinblick auf alle relevanten Eigenschaften.

Bevorzugt enthält die erste Mischung von Weichmachern (M1) mindestens 5 Gewichts-% eines Phthalsäure-basierten Weichmachers und mindestens 5 Gewichts-% eines Weichmachers, der auf einer von Phthalsäure unterschiedlichen Säure basiert, bezogen auf ein Gesamtgewicht der Mischung M1 von 100 Gewichts-%.

*Mischung von Weichmachern (M1)*

Gemäß Schritt (a) wird eine erste Mischung von Weichmachern (M1) bereitgestellt. Vorzugsweise ist der Phthalsäure-basierte Weichmacher ausgewählt aus der Gruppe bestehend aus Dibutylphthalat (DBP), Dioctylphthalat (DOP), Diethylhexylphthalat (DEHP), Benzylbutylphthalat (BBP), Diisobutylphthalat (DIBP), Dipentylphthalat (DPP), Diisopentylphthalat, n-Pentylisopentylphthalat, Dihexylphthalat, Diisoheptylphthalat (DiHP), Diisononylphthalat (DINP), und Mischungen von zwei oder mehr davon; bevorzugt aus der Gruppe bestehend aus Dibutylphthalat (DBP), Dioctylphthalat (DOP), Diethylhexylphthalat (DEHP), Diisobutylphthalat (DIBP), Diisononylphthalat (DINP), Benzylbutylphthalat (BBP) und Mischungen von zwei oder mehr davon.

Vorzugsweise ist die von Phthalsäure unterschiedliche Säure ausgewählt aus der Gruppe bestehend aus Adipinsäure, Terephthalsäure, 1,2-Cyclohexandicarbonsäure, 1,4-Cyclohexandicarbonsäure, Benzoesäure, Dibenzoesäure, Zitronensäure, Fettsäure, epoxidierte Fettsäure und Mischungen von zwei oder mehr dieser Säuren, wobei die Fettsäure bzw. epoxidierte Fettsäure weiter bevorzugt ausgewählt aus der Gruppe bestehend aus Palmitinsäure, epoxidierter Palmitinsäure, Stearinsäure, epoxidierter Stearinsäure, Ölsäure, epoxidierter Ölsäure, Linolsäure, epoxidierter Linolsäure, Linolensäure, epoxidierter Linolensäure, Palmitoleinsäure, epoxidierter Palmitoleinsäure, Arachidinsäure, epoxidierter Arachidinsäure, und Mischungen von zwei oder mehr dieser Säuren. "Epoxidierte Fettsäure" bedeutet, dass mindestens eine der in der Fettsäure vorhandenen Doppelbindungen epoxidiert ist.

Vorzugsweise ist der Weichmacher, der auf einer von Phthalsäure unterschiedlichen Säure basiert, ausgewählt aus der Gruppe bestehend aus 1,2-Cyclohexandicarbonsäurediisononylester (DINCH), 1,2-Cyclohexandicarbonsöure-di-2-ethylhexylester, Di (2-ethylhexyl)adipat (DOA), Diethylenglykoldibenzoat, Di (2-ethylhexyl)terephthalat (DOTP) epoxidiertes Sojabohnenöl (ESBO), epoxidiertes Leinsamenöl (ELO), und Mischungen von zwei oder mehr davon.

Vorzugsweise ist die erste Mischung von Weichmachern (M1) erhalten oder erhältlich aus einer Extraktion eines polymeren Materials mit einem Lösungsmittel, wobei das polymere Material ein Polymer, einen Phthalsäure-basierten Weichmacher und mindestens einen Weichmacher, der auf einer von Phthalsäure unterschiedlichen Säure basiert, umfasst, wobei das zur Extraktion eingesetzte oder einsetzbare Lösungsmittel weiter bevorzugt ein Lösungsmittel ausgewählt aus der Gruppe bestehend aus C5 bis C10 cyclischer Carbonsäureester (Lacton), C3 bis C10 Keton, und Mischungen von zwei oder mehr dieser Verbindungen umfasst.

Das zur Extraktion eingesetzte oder einsetzbare Lösungsmittel umfasst weiter bevorzugt mindestens 2-Butanon und/oder 5-Methyloxolan-2-on (gamma-Valerolacton, GVL) umfasst, weiter bevorzugt mindestens gamma-Valerolacton umfasst, weiter bevorzugt aus gamma-Valerolacton besteht. Bevorzugt enthält das zur Extraktion eingesetzte oder einsetzbare Lösungsmittel weiterhin gegebenenfalls ein oder mehrere weitere Lösungsmittel, ausgewählt aus der Gruppe bestehend aus Wasser und organischen Lösungsmitteln mit einem logarithmischen Kow im Bereich von -1,6 bis +1,6, vorzugsweise ausgewählt aus der Gruppe, bestehend aus Wasser, C5- bis C12-Alkan, aliphatischer C1- bis C10-Alkohol, C2 bis C10 cyclisches Keton, $HO-[C1 \text{ bis } C10 \text{ Alkyl-O-}]_n\text{-H}$, wobei n eine ganze Zahl im Bereich von 2 bis 1000 ist, C1 bis C10 Alkyl-O-C3 bis C10 Alkylether, C3 bis C10 cyclischer Ether, gegebenenfalls substituiert mit einer oder mehreren C1 bis C6 Alkylgruppen, C6 bis C10 aromatischer Kohlenwasserstoff, gegebenenfalls substituiert mit einer oder mehreren C1 bis C6 Alkylgruppen, C2 bis C10 aliphatischer Ester, C8 bis C11 aromatischer Ester, C3 bis C12 Amid, bevorzugt $R^1R^2N-C(=O)-R^3$, wobei $R^1$, $R^2$ unabhängig voneinander eine C1 bis C4 Alkylgruppe sind und $R^3$ aus der Gruppe bestehend aus C1 bis C9 Alkylgruppe, C1 bis C10 Estergruppe und C1 bis C6 Ethergruppe ausgewählt ist, C3 bis C6 Lactam, gegebenenfalls substituiert mit einem oder mehreren Substituenten ausgewählt aus C1 bis C6 Alkylgruppe, C1 bis C6 Estergruppe und C1 bis C6 Ethergruppe, und C5 Imidazolidin, gegebenenfalls substituiert mit einer oder mehreren C1 bis C6 Alkylgruppen, C5 bis C7 Imidazolidon, gegebenenfalls substituiert mit einer oder mehreren C1 bis C6 Alkylgruppen und Mischungen von zwei oder mehr dieser Lösungsmittel. Weitere Details zum Lösungsmittel sind nachstehend in der Sektion zum kombinierten Prozess gemäß des zweiten Aspekts der vorliegenden Erfindung weiter beschrieben.

*Alkohol A*

Gemäß Schritt (b) wird ein Alkohol $C_nH_{2n+1}OH$ (A) bereitgestellt, wobei n ein Integer aus dem Bereich von 9 bis 15 ist. Vorzugsweise ist der Index n des gemäß (b) bereitgestellten Alkohols A ein Integer aus dem Bereich von 9 bis 12.

Bevorzugt ist der Alkohol A ausgewählt aus der Gruppe bestehend aus linearem $C_9H_{19}OH$, verzweigtem $C_9H_{19}OH$, linearem $C_{10}H_{21}OH$, verzweigtem $C_{10}H_{21}OH$, linearem $C_{11}H_{23}OH$, verzweigtem $C_{11}H_{23}OH$, linearem $C_{12}H_{25}OH$, verzweigtem $C_{12}H_{25}OH$, und Mischungen von zwei oder mehr dieser Alkohole; wobei der Alkohol A bevorzugt mindestens verzweigtes $C_9H_{19}OH$ oder $C_{10}H_{21}OH$, weiter bevorzugt mindestens 2-Propylheptanol und/oder Isononanol, umfasst.

Nonanol (C$_9$H$_{19}$OH)

Im Wesentlichen geradkettiges Nonanol (lineares C$_9$H$_{19}$OH) kann durch die rhodium- oder vorzugsweise kobaltkatalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - löslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol (verzweigtea C$_9$H$_{19}$OH), , handelt es sich nicht um eine einheitliche chemische Verbindung, sondern um ein Gemisch aus unterschiedlich verzweigten isomeren C$_9$-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononalgemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können Isobuten, cis- und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiOz oder Al$_2$O$_3$ als Trägermaterial aufgebrachter Phosphorsäure oder Zeolithe, Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C$_4$-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird. Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas®- oder EMOGAS®-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 9514647 durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert.

Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Bevorzugt werden Isononanole mit einem Isoindex von 0,8 bis 2, vorzugsweise von 1,0 bis 1,8 und besonders bevorzugt von 1,1 bis 1,5 verwendet, die nach den vorstehend genannten Verfahren hergestellt werden können.

Lediglich beispielhaft werden im Folgenden mögliche Zusammensetzungen von Isononanolgemischen angegeben, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 95/14647 A1 erzeugten Isooctengemisches hergestellt wurde, folgende Zusammensetzung haben:

- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylenhaltigen Butengemisches als Rohstoff mittels des PolyGas®- oder EMOGASO-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:

- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;

- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.- % sonstige Alkohole mit 9 Kohlenstoffatomen;

mit der Maßgabe, dass sich die Gesamtsumme der genannten Komponenten 100 Gew.- % ergibt.

Decanol ($C_{10}H_{21}OH$)

Bei Isodecanol handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas®- oder dem EMOGASO-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von $C_7$-$C_9$-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches ein verzweigter $C_{10}H_{21}OH$ Alkohol ist, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US 2,921,089 A, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methylhexanol, 2-Propyl-5-methylhexanol, 2-Isopropylheptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propylheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I - ein aus dem $C_4$-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10 : 1 bis 20 : 1 gebildet, wohingegen bei Verwendung von mit Phosphit-Liganden, beispielsweise gemäß US 5,288,918 A oder WO 05/028407 A1, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligandmodifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen Cs-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der $C_{10}$-Alkoholkomponente der erfindungsgemäß eingesetzten Estergemische zu beeinflussen und zu steuern. Desgleichen ist es möglich, das Cs-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP 0 366 089 A, US 4,426,524 A oder US 5,434,313 A beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer Cs-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, reines 2-Propylheptanol als Alkohol A verwendet werden. Im Allgemeinen werden jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol als Alkohol A entspricht die Isomerenzusammensetzung der Alkylestergruppen bzw. Alkylethergruppen praktisch der Zusammensetzung der zur Veresterung verwendeten Propylheptanol-Isomerengemische.

Undecanol ($C_{11}H_{23}OH$)

Die Undecanole, die als Alkohol Aeingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Verbindungen (II) verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von $C_7$- bis $C_{10}$-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen $C_7$- bis Cn-Alkylalkohole bzw. deren Gemische, wie vorstehend beschrieben, als Alkohol A verwendet werden.

Dodecanol ($C_{12}H_{25}OH$)

Im Wesentlichen geradkettiges Dodecanol kann in vorteilhafter Weise über das Alfol®- oder Epal®-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der $C_{12}$-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol (verzweigtes $C_{12}H_{25}OH$) kann analog zu den zuvor beschriebenen Verfahren zur Codimerisierung und/oder Oligomerisierung von Olefinen mit nachfolgender Hydroformylierung und Hydrierung der Isoundecen-Gemische erhalten werden. Nach destillativer Reinigung des Austrags der Hydrierung können die so erhaltenen Isododecanole bzw. deren Gemische, wie vorstehend beschrieben, als Alkohol A verwendet werden.

*Umesterungskatalysator*

Gemäß Schritt (i) erfolgt das Kontaktieren der Mischung von Weichmachern M1 gemäß (a) mit dem Alkohol A gemäß (b) in Gegenwart eines Umesterungskatalysators.

Vorzugsweise umfasst der Umesterungskatalysator einen Lewis-Säure-Umesterungskatalysator und/oder einen Brönstedt-Säure-Umesterungskatalysator, weiter bevorzugt einen Umesterungskatalysator ausgewählt ist aus der Gruppe bestehend aus Schwefelsäure, para-Toluolsulfonsäure, Titan basiertem Umesterungskatalysator, und Mischungen von zwei oder mehr davon, wobei der Titan basierte Umesterungskatalysator bevorzugt ausgewählt ist aus der Gruppe bestehend aus Tetra-iso-propyltitanat, Tetra-n-butyltitanat und Mischungen von Tetra-iso-propyltitanat und Tetra-n-butyltitanat.

*zweite Mischung von Weichmachern (M2)*

In Schritt (i) wird eine zweite Mischung von Weichmachern (M2) erhalten, wobei die Zusammensetzung von M2 und die Zusammensetzung von M1 unterschiedlich sind.

Vorzugsweise umfasst die zweite Mischung von Weichmachern M2 Ester des Alkohols A mit Phthalsäure und Ester des Alkohols A mit der von Phthalsäure unterschiedlichen Säure, weiter bevorzugt Ester, in welchen alle Säuregruppen der Phthalsäure mit Alkohol A verestert sind und Ester, in welchen alle Säuregruppen der von Phthalsäure unterschiedlichen Säure mit Alkohol A verestert sind, weiter bevorzugt bestehen mindestens 90 Gewichts-%, weiter bevorzugt mindestens 95 Gewichts-% der Mischung M2 aus Estern, in welchen alle Säuregruppen der Phthalsäure mit Alkohol A verestert sind und Estern, in welchen alle Säuregruppen der von Phthalsäure unterschiedlichen Säure mit Alkohol A verestert sind.

*Kontaktieren in Schritt (i)*

Gemäß Schritt (i) erfolgt das Kontaktieren der Mischung von Weichmachern M1 gemäß (a) mit dem Alkohol A gemäß (b) in Gegenwart eines Umesterungskatalysators unter Bedingungen, die eine Umesterung der in der Mischung M1 enthaltenen Weichmacher erlauben.

Bevorzugt erfolgt das Kontaktieren in Schritt (i) in einem molaren Verhältnis der Summe an Phthalsäure-basiertem Weichmacher und Weichmacher, der auf einer von Phthalsäure unterschiedlichen Säure basiert, zum Alkohol A im Bereich von 1:100 bis 1:2, weiter bevorzugt im Bereich von 1:50 bis 1:2, weiter bevorzugt im Bereich von 1:10 bis 1:2.

Bevorzugt erfolgt das Kontaktieren in Schritt (i) in einem gewichtsbasierten Verhältnis der Gesamtmasse an Phthalsäure-basiertem Weichmacher und Weichmacher, der auf einer von Phthalsäure unterschiedlichen Säure basiert zur Masse des Umesterungskatalysators im Bereich von 100:1 bis 100:0,01, weiter bevorzugt im Bereich von 100:0,1 bis 100:0,02, weiter bevorzugt im Bereich von 100:0,8 bis 100:0,03.

Bevorzugt erfolgt das Kontaktieren in Schritt (i) unter Schutzgasatmosphäre, weiter bevorzugt unter Stickstoff.

Bevorzugt umfasst Schritt (i) des erfindungsgemäßen Verfahrens:

(i.1) Erzeugen einer Reaktionsmischung aus Mischung M1, Alkohol A und Umesterungskatalysator;

(i.2) Erwärmen der Reaktionsmischung aus (i.1) auf eine Temperatur T, die der Siedetemperatur des Alkohols A ± 5 K entspricht, vorzugsweise bei einem Druck p1;

(i.3) Halten der Reaktionsmischung bei einer Temperatur T2 mit T2 = T1 ± 10 K für eine Zeitspanne t unter Absenkung des Druckes von p1 auf einen Druck p2 mit p2 < p1, unter Erhalt einer zweiten Mischung von Weichmachern (M2), wobei die Zusammensetzung von M2 und die Zusammensetzung von M1 unterschiedlich sind.

Bevorzugt umfasst Schritt (i) weiterhin:
(i.4) Destillative Entfernung von zumindest einem Teil der aus der Mischung M1 freigesetzten Alkohole.

Der Druck p1 liegt bevorzugt im Bereich von 500 bis 1500 hPa, weiter bevorzugt im Bereich von 800 bis 1200 hPa, und/oder p2 im Bereich von 0,95 x p1 bis 0,05 x p1, bevorzugt im Bereich von 0,9 x p1 bis 0,1 x p1. Die Zeitspanne t beträgt vorzugsweise mindestens eine Stunde, bevorzugt im Bereich von 1 bis 72 Stunden, weiter bevorzugt im Bereich von 5 bis 48 Stunden.

Bevorzugt bestehen mindestens 90 Gewichts-%, weiter bevorzugt mindestens 95 Gewichts-%, weiter bevorzugt mindestens 99 Gewichts-% der gemäß (i.1) erzeugte Reaktionsmischung aus Mischung M1, Alkohol A und Umesterungskatalysator.

Bevorzugt enthält die gemäß (i.1) erzeugte Reaktionsmischung weniger als 1 Gewichts-% an weiteren organischen Lösungsmitteln, bezogen auf das Gesamtgewicht der Reaktionsmischung von 100 Gewichts-%, wobei die Gruppe der weiteren organischen Lösungsmittel nicht einen Alkohol A umfasst.

*Epoxidiertes Sojabohnenöl*

In einer bevorzugten Ausführungsform des Verfahrens umfasst die Mischung von Weichmachern (M1) bzw. die gemäß (i.1) erzeugte Reaktionsmischung als Weichmacher, der auf einer von Phthalsäure unterschiedlichen Säure basiert, mindestens epoxidiertes Sojabohnenöl (ESBO) und/oder epoxidiertes Leinsamenöl (ELO).

In einer weiteren bevorzugten Ausführungsform des Verfahrens umfasst die Mischung von Weichmachern (M1) bzw. die gemäß (i.1) erzeugte Reaktionsmischung einen Weichmacher, der auf Phthalsäure basiert, mindestens epoxidiertes Sojabohnenöl (ESBO) und/oder epoxidiertes Leinsamenöl (ELO), und optional mindestens einen weiteren Weichmacher, der auf einer von Phthalsäure unterschiedlichen Säure basiert, wobei die von Phthalsäure unterschiedliche Säure ausgewählt ist aus der Gruppe bestehend aus Adipinsäure, Terephthalsäure, 1,2-Cyclohexandicarbonsäure, 1,4-Cyclohexandicarbonsäure, Benzoesäure, Dibenzoesäure, Zitronensäure, Fettsäure, und Mischungen von zwei oder mehr dieser Säuren. Epoxidiertes Sojabohnenöl (ESBO) und/oder epoxidiertes Leinsamenöl (ELO) sind bevorzugt in 0.001 bis 10 Gewichts-%, bezogen auf ein Gesamtgewicht der Mischung an Weichmachern (M1) von 100 Gewichts-%, enthalten.

Vorzugsweise enthält die gemäß (i.1) erzeugte Reaktionsmischung weniger als 1 Gewichts-% an weiteren organischen Lösungsmitteln, bezogen auf das Gesamtgewicht der Reaktionsmischung von 100 Gewichts-%, wobei die Gruppe der weiteren organischen Lösungsmittel nicht einen Alkohol A umfasst.

Bevorzugt bestehen mindestens 90 Gewichts-%, bevorzugt mindestens 95 Gewichts-%, weiter bevorzugt mindestens 99 Gewichts-% der gemäß (i.1) erzeugten Reaktionsmischung aus Mischung M1, Alkohol A und Umesterungskatalysator.

Vorzugsweise umfasst die zweite Mischung von Weichmachern (M2) Ester des Alkohols A mit Phthalsäure, und mindestens einen Ester des Alkohols A mit epoxidierter Linolsäure.

Die durch Umesterung aus dem epoxidierten Sojaöl erhaltenen Ester des Alkohols A mit epoxidierter Linolsäure sowie die weiteren, insbesondere aus den weiteren ungesättigen und entsprechend epoxidierten Fettsäuren des epoxidierten Sojaöls erhaltenen umgeesterten Säuren, sind auch in umgeesterter Form vorteilhaft, da sie ihre Epoxidgruppen zumindest anteilig, weiter bevorzugt zu mindestens 50%, auch nach der Umesterung enthalten und bei der weiteren Verwendung der erhaltenen Mischung M2 neben der Wirkung als Weichmacher auch zur thermischen Stabilität beitragen.

2. Aspekt - Kombinierter Prozess (Extraktion + Umesterung)

Ein zweiter Aspekt der Erfindung betriff einen kombinierten Prozess umfassend

(A) Weichmacherextraktion aus einem polymeren Material unter Erhalt einer Mischung von Weichmachern (M1), umfassend einen Phthalsäure-basierten Weichmacher und mindestens einen Weichmacher, der auf einer von Phthalsäure unterschiedlichen Säure basiert;
(B) Umesterung der aus (A) erhaltenen Mischung von Weichmachern (M1),

wobei (A) umfasst:

(A.a) Bereitstellen eines polymeren Materials, das ein Polymer, einen Phthalsäure-basierten Weichmacher und mindestens einen Weichmacher, der auf einer von Phthalsäure unterschiedlichen Säure basiert, umfasst, und Bereitstellen eines Lösungsmittels;

(A.i) Kontaktieren des polymeren Materials mit dem Lösungsmittel, wodurch eine flüssige Mischung erhalten wird, welche das Lösungsmittel, gelöstes Polymer und die Weichmacher umfasst;

(A.ii) Ausfällen des Polymers aus der flüssigen Mischung aus (A.i) durch Zusatz eines Anti-Lösungsmittels, unter Erhalt einer flüssigen Phase, die Lösungsmittel, Anti-Lösungsmittel und Weichmacher enthält, und eines festen Rückstandes, der das Polymer enthält;

(A.iii) Separation von festem Rückstand und flüssiger Phase;

(A.iv) Separation von Lösungsmittel, Anti-Lösungsmittel und Weichmachern durch Destillation, wodurch eine vorzugsweise flüssige Mischung (M1) erhalten wird, die den Phthalsäure-basierten Weichmacher und den mindestens einen Weichmacher, der auf einer von Phthalsäure unterschiedlichen Säure basiert, umfasst, und eine oder mehrere flüssige Fraktionen, die das Lösungsmittel und/oder das Anti-Lösungsmittel umfassen;

wobei (B) umfasst:

(B.i) Kontaktieren der aus (A.iv) erhaltenen Mischung von Weichmachern M1 mit einem Alkohol $C_nH_{2n+1}OH$ (A), wobei n ein Integer aus dem Bereich von 9 bis 15 ist, in Gegenwart eines Umesterungskatalysators unter Bedingungen, die eine Umesterung der in der Mischung von Weichmachern enthaltenen Weichmacher erlauben, unter Erhalt einer zweiten Mischung von Weichmachern (M2), wobei die Zusammensetzung von M2 von der von M1 unterschiedlich ist.

Alle Details, Ausführungsformen und bevorzugten Ausführungsformen, die hier voranstehend zum Verfahren des ersten Aspektes der Erfindung beschrieben sind, gelten ebenso für den kombinierten Prozess des zweiten Aspekts der Erfindung. Insbesondere gelten alle Details, Ausführungsformen und bevorzugten Ausführungsformen, die hier voranstehend zum Verfahren des ersten Aspektes der Erfindung beschrieben sind, für den Schritt (B) des hier beschriebenen kombinierten Prozesses.

In einer bevorzugten Ausführungsform des kombinierten Prozesses ist das Lösungsmittel gemäß (A.a) ausgewählt aus der Gruppe bestehend aus C5 bis C10 cyclischer Carbonsäureester (Lacton), C3 bis C10 Keton und Mischungen von zwei oder mehr dieser Verbindungen.

Das Lösungsmittel gemäß (A.a) umfasst weiter bevorzugt mindestens 2-Butanon und/oder 5-Methyloxolan-2-on (gamma-Valerolacton, GVL) umfasst, weiter bevorzugt mindestens gamma-Valerolacton umfasst, weiter bevorzugt aus gamma-Valerolacton besteht. Bevorzugt enthält das zur Extraktion eingesetzte oder einsetzbare Lösungsmittel weiterhin gegebenenfalls ein oder mehrere weitere Lösungsmittel, ausgewählt aus der Gruppe bestehend aus Wasser und organischen Lösungsmitteln mit einem logarithmischen Kow im Bereich von -1,6 bis +1,6, vorzugsweise ausgewählt aus der Gruppe, bestehend aus Wasser, C5- bis C12-Alkan, aliphatischer C1- bis C10-Alkohol, C2 bis C10 cyclisches Keton, HO-[C1 bis C10 Alkyl-O-]$_n$-H, wobei n eine ganze Zahl im Bereich von 2 bis 1000 ist, C1 bis C10 Alkyl-O-C3 bis C10 Alkylether, C3 bis C10 cyclischer Ether, gegebenenfalls substituiert mit einer oder mehreren C1 bis C6 Alkylgruppen, C6 bis C10 aromatischer Kohlenwasserstoff, gegebenenfalls substituiert mit einer oder mehreren C1 bis C6 Alkylgruppen, C2 bis C10 aliphatischer Ester, C8 bis C11 aromatischer Ester, C3 bis C12 Amid, bevorzugt $R^1R^2N\text{-}C(=O)\text{-}R^3$, wobei $R^1$, $R^2$ unabhängig voneinander eine C1 bis C4 Alkylgruppe sind und $R^3$ aus der Gruppe bestehend aus C1 bis C9 Alkylgruppe, C1 bis C10 Estergruppe und C1 bis C6 Ethergruppe ausgewählt ist, C3 bis C6 Lactam, gegebenenfalls substituiert mit einem oder mehreren Substituenten ausgewählt aus C1 bis C6 Alkylgruppe, C1 bis C6 Estergruppe und C1 bis C6 Ethergruppe, und C5 Imidazolidin, gegebenenfalls substituiert mit einer oder mehreren C1 bis C6 Alkylgruppen, C5 bis C7 Imidazolidon, gegebenenfalls substituiert mit einer oder mehreren C1 bis C6 Alkylgruppen und Mischungen von zwei oder mehr dieser Lösungsmittel.

Bevorzugt besteht das Lösungsmittel gemäß (A.a) zu mindestens 1 Gew.-%, mehr bevorzugt mindestens 5 Gew.-%, mehr bevorzugt mindestens 10 Gew.-%, mehr bevorzugt mindestens 20 Gew.-%, mehr bevorzugt mindestens 30 Gew.-%, mehr bevorzugt mindestens 40 Gew.-%, mehr bevorzugt mindestens 50 Gew.-%, mehr bevorzugt mindestens 60 Gew.-%, mehr bevorzugt mindestens 70 Gew.-%, mehr bevorzugt mindestens 80 Gew.-%, mehr bevorzugt mindestens 90 Gew.-%, mehr bevorzugt mindestens 95 Gew.-%, mehr bevorzugt mindestens 95 Gew.-%, mehr bevorzugt mindestens 96 Gew.-%, mehr bevorzugt mindestens 97 Gew.-%, mehr bevorzugt mindestens 98 Gew.-%, mehr bevorzugt mindestens 99 Gew-% aus gamma-Valerolacton, bezogen auf das Gesamtgewicht des Lösungsmittels gemäß (A.a), welches 100 Gew.-% beträgt.

Geeignete Lösungsmittel sind dem Fachmann ebenso bekannt wie der dekadische Logarithmus des Oktanol-Wasser-Verteilungskoeffizienten ($\log_{KOW}$). Der Oktanol-Wasser-Verteilungskoeffizient KOW einer gegebenen Verbindung ist definiert als das Verhältnis der chemischen Konzentration der Verbindung in der Oktanolphase im Verhältnis zur chemischen Konzentration der Verbindung in der wässrigen Phase in einem Zweiphasensystem von 1-Octanol und Wasser bei einer Temperatur von 25 °C (298 K). Verfahren zur Bestimmung des Oktanol-Wasser-Verteilungskoeffizienten KOW einer gegebenen Verbindung sind dem Fachmann bekannt. Zum Beispiel wird der Oktanol-Wasser-Verteilungskoeffizient KOW einer gegebenen Verbindung unter Verwendung des Schüttelkolbenverfahrens bestimmt, das darin besteht, die Verbindung in einem Volumen aus hochreinem 1-Octanol und deionisiertem Wasser (vorgemischt und kalibriert für mindestens 24 h) aufzulösen und die Konzentration der Verbindung in der 1-Octanol-Phase und der Wasserphase nach einem hinreichend genauen Verfahren zu messen, vorzugsweise mittels UV/VIS-Spektroskopie. Diese Methode ist in der OECD-Leitlinie für die Prüfung chemischer Stoffe, Nummer 107, beschrieben, die am 27. Juli 1995 verabschiedet wurde. Werte von KOW für eine Vielzahl von Stoffen sind bekannt und beispielsweise in der Dortmunder Datenbank (DDB, vgl. http://www.ddbst.com/ddb-search) zu finden.

Hinsichtlich geeigneter Lösungsmittel ist beispielsweise ein aliphatischer C1- bis C10-Alkohol vorzugsweise ein C1- bis C6-Monool, besonders bevorzugt eines oder mehrere ausgewählt aus der Gruppe bestehend aus Methanol, Ethanol und Butanol. Ein C3- bis C10-Keton abgesehen von 2-Butanon ist vorzugsweise Aceton. Ein zyklisches Keton von C2 bis C10 ist vorzugsweise Cyclohexanon. Ein zyklischer C3- bis C10-Ether, gegebenenfalls substituiert mit einer oder mehreren C1- bis C3-Alkylgruppen, ist vorzugsweise Tetrahydrofuran oder 2-Methyltetrahydrofuran oder ein Gemisch aus Tetrahydrofuran und 2-Methyltetrahydrofuran. Ein aromatischer Kohlenwasserstoff C6 bis C10, gegebenenfalls substituiert durch eine oder mehrere C1 bis C3 Alkylgruppe(n), ist vorzugsweise eine oder mehrere, ausgewählt aus der Gruppe, die aus Benzol, Toluol, Ethylbenzol, Xylol (o, m oder p) und Mesitylen besteht. Ein C1-bis C10-Ester ist vorzugsweise einer oder mehrere ausgewählt aus der Gruppe, die aus Estern eines aliphatischen C1- bis C6-Monools mit einer aliphatischen C2- bis C5-Säure besteht. Ein C5- bis C10-cyclischer Carboxylester (Lacton) abgesehen von gamma-Valerolacton ist vorzugsweise einer oder mehrere, ausgewählt aus der Gruppe, die aus Delta-Valerolacton, methyliertem γ-Butyrolacton, ethyliertem γ-Butyrolacton, propyliertem γ-Butyrolacton und β-Propiolacton besteht. Ein C3- bis C6-Lactam, gegebenenfalls substituiert mit einer oder mehreren C1- bis C3-Alkylgruppen, wird vorzugsweise ausgewählt aus der Gruppe, die aus 2-Pyrrolidon, 3-Pyrrolidon und Mischungen von 2-Pyrrolidon und 3-Pyrrolidon besteht, jeweils gegebenenfalls substituiert mit einer oder mehreren C1- bis C3-Alkylgruppen, vorzugsweise am Stickstoffatom, mehr bevorzugt N-Methyl-2-pyrrolidon. Ein Imidazolidon, gegebenenfalls substituiert mit einer oder mehreren C1- bis C3-Alkylgruppen, ist vorzugsweise 1,3-Dimethyl-2-imidazolidinon.

Vorzugsweise umfasst oder ist das Polymer des polymeren Materials gemäß (A.a) ein thermoplastisches Polymer, weiter bevorzugt ausgewählt aus der Gruppe bestehend aus

- thermoplastischem Copolymer, welches in polymerisierter Form mindestens zwei verschiedene Monomere umfasst, wobei die Monomere ausgewählt sind aus der Gruppe bestehend aus C2- bis C10-Monoolefin (vorzugsweise ausgewählt aus der Gruppe bestehend aus Ethylen, Propylen, 1,3-Butadien, 2-Chlor-1,3-butadien und Mischungen aus zwei oder mehr dieser Olefine), Vinylalkohol, C2 bis C10-Alkylester des Vinylalkohols, Vinylacetat, Vinylchlorid, Vinylidenchlorid, Vinylidenfluorid, Tetrafluorethylen, Glycidylacrylat, Glycidylmethacrylat, Acrylat mit Alkoholkomponente von verzweigtem oder unverzweigtem C1 bis C10 Alkoholmethacrylat mit Alkoholbestandteilen von verzweigtem oder unverzweigtem C1 bis C10 Alkohol, aromatisches Vinyl (vorzugsweise Styrol), (Meth)acrylnitril, ethylenisch ungesättigte Mono- oder Dicarbonsäure und Maleinsäureanhydrid (TP.1);

- Polyvinylester (TP.2);

- Polycarbonat (TP.3);

- Polyether (TP.4);

- Polyetherketon (TP.5);

- thermoplastisches Polyurethan (TP.6);

- Polysulfid (TP.7);

- Polysulfon (TP.8);

- Polyester (TP.9);

- Polyalkylenterephthalat (TP.10);

- Polyhydroxyalkanoat (TP.11);

- Polybutylensuccinat (TP.12);

- Polybutylensuccinatadipat (TP.13);

- Polyacrylat mit gleichen oder unterschiedlichen Alkoholrückständen aus der Gruppe der C4- bis C8-Alkohole, vorzugsweise ausgewählt aus Butanol, Hexanol, Octanol und 2-Ethylhexanol (TP.14);

- Polymethylmethacrylat (TP.15);

- Methylmethacrylat-Butylacrylat-Copolymer (TP.16);

- Acrylnitril-Butadien-Styrol-Copolymer (TP.17);

- Ethylen-Propylen-Copolymer (TP.18);

- Ethylen-Propylen-Dien-Copolymer (TP.19);

- Polystyrol (TP.20);

- Styrol-Acrylnitril-Copolymer (TP.21);

- Acrylnitril-Styrol-Acrylat (TP.22);

- Styrol-Butadien-Methylmethacrylat-Copolymer (TP.23);

- Styrol-Maleinsäureanhydrid-Copolymer (TP.24);

- Styrol-Methacrylsäure-Copolymer (TP.25);

- Polyoxymethylen (TP.26);

- Polyvinylalkohol (TP.27);

- Polyvinylacetat (TP.28);

- Polyvinylbutyral (TP.29);

- Polyvinylchlorid (TP.30);

- Polycaprolacton (TP.31);

- Polyhydroxybuttersäure (TP.32);

- Polyhydroxyvaleriansäure (TP.33);

- Polymilchsäure (TP.34);

- Ethylcellulose (TP.35);

- Celluloseacetat (TP.36);

- Cellulosepropionat (TP.37);

- Celluloseacetat/Butyrat (TP.38)

und Mischungen aus zwei oder mehr dieser Polymere.

Bevorzugt umfasst oder ist das Polymer des polymeren Materials gemäß (A.a) ein thermoplastisches Polymer, ausgewählt aus der Gruppe bestehend aus TP.1 bis TP.9 und TP.11 bis TP.38 und Mischungen aus zwei oder mehr dieser Polymere, weiter bevorzugt ausgewählt aus der Gruppe bestehend aus TP.1 bis TP.8 und TP.11 bis TP.38 und Mischungen aus zwei oder mehr dieser Polymere.

Bevorzugt ist das Polymer des polymeren Materials gemäß (A.a) ausgewählt aus der Gruppe bestehend aus Copolymer, das in polymerisierter Form Vinylchlorid umfasst, und mindestens einem weiteren Monomer, ausgewählt aus der Gruppe bestehend aus C2 bis C10 Monoolefin (bevorzugt ausgewählt aus der Gruppe bestehend aus Ethylen, Propylen, 1,3-Butadien, 2-Chlor-1,3-butadien und Gemischen aus zwei oder mehr dieser Olefine), Vinylalkohol, C2- bis C10-Alkylester von Vinylalkohol, Vinylacetat, Vinylidenchlorid, Vinylidenfluorid, Tetrafluorethylen, Glycidylacrylat, Glycidylmethacrylat, Acrylat mit Alkoholkomponente von verzweigtem oder unverzweigtem C1- bis C10-Alkoholmethacrylat mit Alkoholbestandteilen von verzweigtem oder unverzweigtem C1- bis C10-Alkohol, aromatisches Vinylbenzol (vorzugsweise Styrol), (Meth)acrylnitril, ethylenisch ungesättigte Mono- oder Dicarbonsäure und Maleinsäureanhydrid, besonders bevorzugt ein Copolymer, das in polymerisierter Form Vinylchlorid und mindestens Vinylacetat (TP.1.1) enthält; Polyvinylacetat (TP.28); Polyvinylbutyral (TP.29); Polyvinylchlorid (TP.30); Polycaprolacton (TP.31); und Mischungen aus zwei oder mehr dieser Polymere.

Vorzugsweise umfasst das Polymer des polymeren Materials gemäß (A.a) mindestens Polyvinylchlorid (TP.30), wobei weiter bevorzugt mindestens 90 Gewichts-%, mehr bevorzugt mindestens 95 Gewichts-%, mehr bevorzugt mindestens 98 Gewichts-% des in dem polymeren Materials gemäß (A.a) enthaltenen Polymers Polyvinylchlorid sind, basierend auf dem Gesamtgewicht des Polymers, das in dem Polymermaterial enthalten ist, welches 100 Gewichts-% beträgt.

Bevorzugt bestehen mindestens 20 Gewichts-%, mehr bevorzugt im Bereich von 20 bis 90 Gewichts-%, des polymeren Materials gemäß (A.a) aus dem Polymer, wobei das Gesamtgewicht des polymeren Materials 100 Gewichts-% beträgt.

In einer bevorzugten Ausführungsform des kombinierten Prozesses umfasst das gemäß (A.a) bereitgestellte polymere Material weiterhin ein Metallkation enthaltendes Additiv, wobei Schritt (A.i) umfasst:

(A.i.1) Kontaktieren des polymeren Materials mit dem Lösungsmittel, wodurch eine flüssige Mischung erhalten wird, welche das Lösungsmittel, gelöstes Polymer und die Weichmacher umfasst, und ein fester Rückstand, welcher zumindest einen Teil des Metallkation enthaltenden Additivs umfasst;

(A.i.2) Abtrennen der nach (A.i.1) erhaltenen flüssigen Mischung vom festen Rückstand, bevorzugt mittels Filtration, wodurch eine separierte flüssige Mischung erhalten wird, welche das Lösungsmittel, gelöstes Polymer und die Weichmacher umfasst, und eines separierten festen Rückstands, der den ungelösten Teil des Metallkation enthaltenden Additivs umfasst;

und wobei (A.ii') umfasst:

(A.ii') Ausfällen des Polymers aus der separierten flüssigen Mischung aus (A.i.2) unter Zusatz eines Anti-Lösungsmittels, unter Erhalt einer flüssigen Phase, die Lösungsmittel, Anti-Lösungsmittel und Weichmacher enthält und eines festen Rückstandes, der das Polymer enthält.

*Metallkation enthaltendes Additiv*

Das in dem Additiv enthaltene Metallkation ist bevorzugt ein Metallkation mit einer Ladung von $\geq 2$, weiter bevorzugt ausgewählt aus der Gruppe bestehend aus zweiwertigem Metallkation, dreiwertigem Metallkation, vierwertigem Metallkation und Mischungen aus zwei oder mehr davon, wobei das in dem Additiv enthaltene Metallkation weiter bevorzugt aus der Gruppe ausgewählt ist, die aus $Sn^{4+}$, $Zn^{2+}$, $Ba^{2+}$, $Cd^{2+}$, $Ca^{2+}$, $Pb^{2+}$, $Mg^{2+}$, $Al^{3+}$ und Mischungen aus zwei oder mehr dieser Metallkationen besteht, weiter bevorzugt aus der Gruppe bestehend aus $Cd^{2+}$, $Pb^{2+}$, $Zn^{2+}$, $Ba^{2+}$ und Mischungen aus zwei oder mehr dieser Metallkationen, weiterbevorzugt aus der Gruppe bestehend aus $Cd^{2+}$, $Pb^{2+}$ und Mischungen aus $Cd^{2+}$ und $Pb^{2+}$ oder aus der Gruppe bestehend aus $Zn^{2+}$, $Ba^{2+}$ und Mischungen aus $Zn^{2+}$ und $Ba^{2+}$.

Vorzugsweise ist das Metallkation enthaltenden Additiv ausgewählt aus der Gruppe bestehend aus Zinn(IV)-mercaptid, Zinn(IV)-sulfidorganischer Verbindung, Zinn(IV)-carboxylat, substituiertem oder unsubstituiertem Barium(II)-phenolat, Barium(II)-Salz einer Carbonsäure, Cadmium(II)-Salz einer Carbonsäure, Calcium(II)-Salz einer Carbonsäure besteht, Aluminium(III)-Salz einer Carbonsäure, Zink(II)-Salz einer Carbonsäure, substituiertes oder unsubstituiertes Zink(II)-phenolat, Blei(II)-sulfat, Blei(II)-phosphit, Blei(II)-carbonat, Blei(II)-salz einer Carbonsäure, Magnesium(II)-Salz einer Carbonsäure, Hydroxidcarbonathydrat aus zwei oder mehr Metallkationen und Mischungen aus zwei oder mehr dieser Verbindungen, weiter bevorzugt aus der Gruppe bestehend aus Aluminiumstearat, Bariumlaurat, Bariumstearat, Cadmiumlaurat, Cadmiumstearat, Calciumlaurat, Calciumstearat, Bleistearat [$Pb(OOC-C_{17}H_{35})_2$], zweibasischem Bleistearat [$2PbO \cdot Pb(OOC-C_{17}H_{35})_2$], dreibasisches Bleisulfat ($3PbO \cdot PbSO_4 \cdot H_2O$), tetrabasisches Bleisulfat ($4PbO \cdot PbSO_4$)), zweibasisches Bleiphthalat, basischem Bleicarbonat und Mischungen aus zwei oder mehr dieser Verbindungen.

Bevorzugt enthält das polymere Material das Metallkation enthaltenden Additiv in einer Menge im Bereich von 0,05 bis 7 Gew.-%, weiter bevorzugt im Bereich von 0,1 bis 5 Gew.-%, weiter bevorzugt im Bereich von 0,5 bis 3 Gew.-%, bezogen auf das Gesamtgewicht des polymeren Materials von 100 Gew.-%.

*Schritt (A.i) bzw. (A.i. 1)*

Vorzugsweise erfolgt das Kontaktieren in Schritt (A.i) bzw. (A.i.1) mit dem Lösungsmittel bei einer Temperatur T1 unter 190 °C, weiter bevorzugt unter 180 °C, weiter bevorzugt unter 170 °C, weiter bevorzugt bei einer Temperatur T1 im Bereich von 90 bis < 170 °C, weiter bevorzugt eine Temperatur T1 im Bereich von 95 bis 165 °C, weiter bevorzugt eine Temperatur T1 im Bereich von 100 bis 150 °C.

Vorzugsweise erfolgt das Kontaktieren in Schritt (A.i) bzw. (A.i.1) mit dem Lösungsmittel für einen Zeitraum von mindestens 0,1 h, weiter bevorzugt für einen Zeitraum im Bereich von 0,1 bis 10 h, bevorzugt für einen Zeitraum im Bereich von 0,1 bis 6 h, bevorzugt für einen Zeitraum im Bereich von 0,1 bis 4 h.

Bevorzugt erfolgt das Kontaktieren in Schritt (A.i) bzw. (A.i.1) mit dem Lösungsmittel bei einem Druck im Bereich von 800 bis 200.000 hPa.

Vorzugsweise erfolgt das Kontaktieren in Schritt (A.i) bzw. (A.i.1) mit dem Lösungsmittel mit einem massenbasierten Verhältnis Polymermaterial: Lösungsmittel im Bereich von 1:1 bis 1:100, bevorzugter im Bereich von 1:1 bis 1:20, mehr bevorzugt im Bereich von 1:1 bis 1:10.

"Kontaktieren" bedeutet bevorzugt, dass das Polymer zumindest teilweise in das Lösungsmittel eingetaucht ist. Vorzugsweise ist das Polymer zumindest teilweise in das Lösungsmittel eingetaucht, indem mindestens 60 %, mehr bevorzugt mindestens 70 %, mehr bevorzugt mindestens 80 %, mehr bevorzugt mindestens 90 %, mehr bevorzugt mindestens 95 %, mehr bevorzugt mindestens 99 % der Oberfläche des Polymers mit dem Lösungsmittel in Kontakt kommen, bezogen auf die Gesamtoberfläche des Polymermaterials beträgt 100 %.

*Schritt (A. i.2)*

Vorzugsweise erfolgt das Abtrennen der nach (A.i. 1) erhaltenen flüssigen Mischung vom festen Rückstand in Schritt (A.i.2) mittels erhitzter Filtration, mehr bevorzugt durch erhitzte Filtration bei einer Temperatur im Bereich von T1 $\pm$ 20°C, mehr bevorzugt durch erhitzte Filtration bei einer Temperatur im Bereich von T1 $\pm$ 10°C.

Bei der beheizten Filtration werden die Lösung, der Filter und der Trichter erhitzt, besonders bevorzugt so erhitzt, dass jeder eine Temperatur von T1 $\pm$ 20 °C oder T1 $\pm$ 10 °C hat.

In einigen bevorzugten Ausführungsformen des Prozesses erfolgt die Filtration in (A.i.2) bei einem Druck von ≥1.000 hPa, mehr bevorzugt bei einem Druck im Bereich von 1.000 bis 30.000 hPa, bevorzugt im Bereich von 1.000 bis 10.000 hPa, mehr bevorzugt im Bereich von 1.000 bis 6.000 hPa (beheizte Druckfiltration).

In einigen bevorzugten Ausführungsformen des Prozesses erfolgt die Filtration in (A.i.2) unter Verwendung eines Filters mit einer Nennleistung von < 30 $\mu$m, mehr bevorzugt < 25 $\mu$m, mehr bevorzugt <10 $\mu$m, mehr bevorzugt < 5 $\mu$m.

In einigen Ausführungsformen hat der Filter vorzugsweise eine Nennleistung im Bereich von 0,1 bis 30 $\mu$m, mehr bevorzugt im Bereich von 0,1 bis 25 $\mu$m, mehr bevorzugt im Bereich von 0,2 bis 10 $\mu$m. Die hier angegebenen Nennwerte bedeuten bevorzugt, dass der Filter 90% aller Partikel mit dem angegebenen mittleren Durchmesser oder mit einem größeren mittleren Durchmesser am Durchgang hindert. Bei unsymmetrischen Partikeln bezieht sich der durchschnittliche Durchmesser auf den größten Durchmesser des Partikels.

In einigen bevorzugten Ausführungsformen des Prozesses erfolgt die Filtration in (A.i.2) unter Verwendung eines Filters, der ein organisches Material oder ein anorganisches Material umfasst, mehr bevorzugt ein Filter, der ein organisches Material umfasst, mehr bevorzugt ein Filter, der eine Zellulosematrix umfasst.

In einigen bevorzugten Ausführungsformen des Prozesses umfasst (A.i.2)

(a) Zugabe eines Filterhilfsmittels zu dem in (A.i.1) erhaltenen flüssigen Gemisch, wodurch ein flüssiges Gemisch erhalten wird, das das Lösungsmittel, das gelöste Polymer, einen ungelösten Teil des Additivs, der das Metallkation enthält, und das Filterhilfsmittel umfasst; und
(b) Filtrieren des in (a) erhaltenen flüssigen Gemisches;

oder

(a') Bereitstellen eines Filters, auf dem Filteraid abgelagert ist; und
(b') Filtrieren des in (A.i.1) erhaltenen flüssigen Gemisches über dem in (b) vorgesehenen Filter.

Erhalten wird ein flüssiges Gemisch, das das Lösungsmittel und das gelöste Polymer umfasst und das im Vergleich zu dem in (A.i.1) erhaltenen flüssigen Gemisch an Metallkation abgereichert ist, und einen Rückstand, der den ungelösten Teil des Additivs umfasst.

In einigen bevorzugten Ausführungsformen des Prozesses wird das Filterhilfsmittel ausgewählt aus der Gruppe bestehend aus pulverisierter Cellulose, Kieselgur, Perlit, Aktivkohle, Aluminiumoxid, Ton, Kieselsäure, Glaswolle, absorbierter Baumwolle (Watte), Magnesiumsilikat, $(MgAl)_2Si_4O_{10}(OH)\cdot4H_2O$, $(MgAl)_5Si_8O_{20}\cdot4H_2O$, Aluminium-Schichtsilikat bestehend aus Montmorillonit, $(Ca, Na)0,3(Al,Mg)2Si_4O_{10}(OH)_2$ n $H_2O$, Natriumaluminium-ortho-Silikat $(Na_2O.Al_2O_3.xSiO_2.yH_2O)$, Aluminiumsilikat, Sägemehl, Chitosan, landwirtschaftliche oder industrielle Abfälle, Schlamm, Flugasche, Papierfabrikabfälle, $Al_2O_3$, $SiO_2$, $Fe_2O_3$, $Fe_3O_4$, $TiO_2$, ZnO, MgO ein Verbund aus zwei oder mehr dieser Metalloxide, mesoporöse Kieselerden (MBCs), $ZnFe_2O_4$, $MnFe_2O_4$, $NiFe_2O_4$, $CoFe_2O_4$, $CuFe_2O4$, Ionenaustauscherharz, und Mischungen aus zwei oder mehr davon. Ein Ionenaustauscherharz ist vorzugsweise ein Kationenaustauscherharz, besonders bevorzugt ein saures Kationenaustauscherharz, beispielsweise Amberlyst 15 (CAS-Nr. 39389-20-3).

In einigen bevorzugten Ausführungsformen des Prozesses weist das Filterhilfsmittel in Mischung mit Wasser und/oder organischem Lösungsmittel einen pH-Wert $\geq$ 7 auf, vorzugsweise im Bereich von 7 bis 11. Der pH-Wert eines wässrigen Gemisches des jeweiligen Filterhilfsmittels oder eines Gemischs des jeweiligen Filterhilfsmittels in einem geeigneten organischen Lösungsmittel, beispielsweise DMSO, wird vorzugsweise durch eine pH-empfindliche Elektrode, vorzugsweise eine pH-empfindliche Glaselektrode, und/oder durch pH-Papier bestimmt.

In einigen bevorzugten Ausführungsformen des Prozesses wird das Filterhilfsmittel ausgewählt aus der Gruppe, die aus pulverisierter Zellulose, Kieselgur, Perlit, Aktivkohle, Ton, Kieselsäure, Glaswolle, absorbierter Baumwolle (Watte), Magnesiasilikat und Mischungen von zwei oder mehr davon besteht, vorzugsweise aus der Gruppe bestehend aus pulverisierter Zellulose, Kieselgur, Perlit und Mischungen von zwei oder drei davon, Besonders bevorzugt handelt es sich bei dem Filterhilfsmittel um pulverisierte Zellulose, Kieselgur, Magnesiasilikat oder ein Gemisch aus zwei oder mehr davon.

In einigen bevorzugten Ausführungsformen des Prozesses wird das Filterhilfsmittel in (a) in einem gewichtsbasierten Verhältnis in Bezug auf die vorgesehene Menge an polymerem Material im Bereich von 0,5 bis 50 Gew.-%, vorzugsweise im Bereich von 1 bis 20 Gew.-%, zugegeben.

In einigen bevorzugten Ausführungsformen des Prozesses wird das Filterhilfsmittel auf dem Filter, der einen Durchmesser D(f) hat, in (a') als eine Schicht mit einer Dicke LT(f) mit $0,01 < LT(f)/D(f) < 2$, vorzugsweise $0,05 < LT(f)/D(f) < 1$ abgeschieden.

Ein Filterhilfsmittel wird normalerweise verwendet, um die Filtereffizienz zu verbessern, indem es eine poröse, durchlässige und starre Gitterstruktur aufbaut und ein Verstopfen des Filters verhindert. In der vorliegenden Erfindung hat es sich jedoch überraschenderweise herausgestellt, dass die Verwendung eines Filterhilfsmittels auch die Rückhaltung eines Metallkations enthaltenden Rückstands auf dem Filter verbessert, wodurch die Menge an Metallkation im Filtrat und folglich auch in dem polymeren Material, sobald es aus dem flüssigen Gemisch ausgefällt wird, reduziert wird. Das aus der Filtration nach (b) oder (b') erhaltene Flüssigkeitsgemisch besteht aus weniger als 1 Gew.-%, vorzugsweise weniger als 0,5 Gew.-% des Filterhilfsmittels, das in (a) zugesetzt oder auf dem Filter in (a') abgelagert ist.

*Schritt (A.ii)*

Vorzugsweise umfasst das Ausfällen des Polymers aus der flüssigen Mischung aus (A.i) bzw. (A.i.2) in (A.ii):

(A.ii.1) Einstellen der Temperatur der flüssigen Mischung aus (A.i) bzw. (A.i.2) auf eine Temperatur T2, die unter T1 liegt, vorzugsweise eine Temperatur im Bereich von 10 °C bis 100 °C, mehr bevorzugt eine Temperatur im Bereich von 15 bis 90 °C, mehr bevorzugt im Bereich von 20 bis 80 °C;
(A.ii.2) Ausfällung des Polymers aus der flüssigen Mischung aus (A.i) bzw. (A.i.2) bei T2 durch Zugabe eines Anti-Lösungsmittels.

Als Lösungsmittel gilt gemäß ULLMANN'S Encyclopedia of Industrial Chemistry (Wiley-VCH Verlag GmbH & Co. KGaA, Weinheim, 2012, Vol. 33, Chapter "Solvents", S. 619 bis 688, insbesondere S. 626; DOI: 10.1002/14356007.a24_437) eine Substanz, die die Fähigkeit hat, eine gegebene Substanz wie ein Polymer (den gelösten Stoff) bei Raumtemperatur aufzulösen. Die Löslichkeitsparameter des Lösungsmittels und des gelösten Stoffes sind ähnlich. Ein NichtLösungsmittel (synonym genannt: Anti-Lösungsmittel) ist definiert als ein Lösungsmittel, welches nicht in der Lage ist, den betreffenden Stoff aufzulösen. Die Löslichkeitsparameter und Wasserstoffbrückenparameter eines Anti-Lösungsmittels liegen außerhalb der Löslichkeitsbereiche des Polymers/der Polymere, aber innerhalb der Löslichkeitsbereiche der aufzulösenden Substanzen, insbesondere innerhalb der Löslichkeitsbereiche des/der Weichmacher(s).

In einigen bevorzugten Ausführungsformen des Prozesses wird das Anti-Lösungsmittel aus der Gruppe ausgewählt, die aus Wasser, C1 bis C5 Monoalkohol, C1 bis C6 Dialkohol und Mischungen aus zwei oder mehr dieser Lösungsmittel besteht, besonders bevorzugt aus der Gruppe, die aus Wasser, C1 bis C5 Monoalkohol besteht, Dialkohol C1 bis C5 und Mischungen aus zwei oder mehr dieser Anti-Lösungsmittel, besonders bevorzugt aus der Gruppe bestehend aus Wasser, C1 bis C3 Monoalkohol und Mischungen aus zwei oder mehr dieser Anti-Lösungsmittel, mehr bevorzugt umfasst das verwendete Anti-Lösungsmittel Isopropanol, besonders bevorzugt bestehen mindestens 95 Gew.-

% des verwendeten Anti-Lösungsmittels aus Isopropanol.

In einigen bevorzugten Ausführungsformen des Prozesses wird das Anti-Lösungsmittel in einem gewichtsbasierten Verhältnis Anti-Lösungsmittel: Polymermaterial im Bereich von 4:1 bis 75:1, mehr bevorzugt im Bereich von 5:1 bis 50:1, mehr bevorzugt im Bereich von 5:1 bis 20:1 zugegeben.

In einigen bevorzugten Ausführungsformen des Prozesses umfasst das Polymer des festen Rückstands, welcher in (A.ii) bzw. (A.ii.2) erhalten wird, <40 %, mehr bevorzugt < 35 % der Menge an Metallkation, die in dem initial bereitgestellten Polymermaterial vorhanden war, und umfasst gegebenenfalls <5 %, bevorzugt < 1 % der Weichmachermenge, die in dem initial bereitgestellten Polymermaterial vorhanden waren.

Bevorzugt erfolgt die Separation von festem Rückstand und flüssiger Phase gemäß (A.iii) mittels eines Verfahrens ausgewählt aus der Gruppe der Fest-Flüssig-Trennverfahren, bevorzugt ausgewählt aus der Gruppe bestehend aus Filtration, Sedimentation, Zentrifugation und Mischtypen dieser Verfahren.

Fest-Flüssig-Trennverfahren sind dem Fachmann bekannt, insbesondere Fest-Flüssig-Trennverfahren wie Filtration, z. B. beheizter Druckfiltration, Sedimentation oder Zentrifugation (s. Handbuch der mechanischen Fest-Flüssig-Trennung Taschenbuch - 29. April 2004 von Klaus Luckert (Herausgeber)).

In einer bevorzugten Ausführungsform des kombinierten Prozesses umfasst die Separation von festem Rückstand und flüssiger Phase gemäß (A.iii):

(A.iii.1) Separation von festem Rückstand und flüssiger Phase, wodurch der feste Rückstand, der das Polymer umfasst, und die flüssige Phase, die das Lösungsmittel, das Anti-Lösungsmittel und den gelösten Weichmacher umfasst, erhalten wird;

(A.iii.2) gegebenenfalls Waschen des gemäß (A.iii.1) erhaltenen festen Rückstands mit einem Anti-Lösungsmittel;

(A.iii.3) Trocknen der gemäß (A.iii.1) erhaltenen festen Rückstands oder des gemäß (A.iii.2) erhaltenen gewaschenen festen Rückstands.

*Schritt (A.iv)*

Bevorzugt erfolgt die Separation von Lösungsmittel, Anti-Lösungsmittel und Weichmachern durch Destillation gemäß (A.iv) bei einer Temperatur, welche unterhalb der Siedetemperatur der flüssigen Mischung (M1) liegt.

Die Mischung (M1), die den Phthalsäure-basierten Weichmacher und den mindestens einen Weichmacher, der auf einer von Phthalsäure unterschiedlichen Säure basiert, umfasst, liegt in flüssiger Form vor. Aufgrund der höheren Molmassen und der daraus resultierenden höheren Siedetemperaturen der Weichmacher im Vergleich zu Lösungsmittel und Anti-Lösungsmittel werden die Weichmacher bei der Destillation nicht entfernt. Bevorzugt erfolgt die Destillation gemäß (A.iv) bei einer Temperatur, welche unterhalb der Siedetemperatur des Weichmachers in der Mischung M1 mit dem niedrigsten Siedepunkt liegt.

Bei der Destillation gemäß (Ai.v) wird/werden eine oder mehrere flüssige Fraktionen erhalten, die das Lösungsmittel und/oder das Anti-Lösungsmittel umfassen. Bevorzugt umfasst der Prozess weiterhin das Recycling des abgeschiedenen Lösungsmittels, das in (A.iv) erhalten wurde, zumindest teilweise in (A.a) bzw. (A.i) und/oder das Recycling des abgetrennten Anti-Lösungsmittels, das in (A.iv) erhalten wurde, zumindest teilweise in (A.ii).

3. Aspekt - Mischung M2

Gemäß eines dritten Aspektes betrifft die Erfindung auch eine Mischung aus Estern eines Alkohols $C_nH_{2n+1}OH$ (A), wobei n ein Integer aus dem Bereich von 9 bis 15 ist, mit Phthalsäure und Estern des Alkohols A mit einer von Phthalsäure unterschiedlichen Säure, bevorzugt erhalten oder erhältlich aus einem Verfahren gemäß dem erstem Aspekt der Erfindung und/oder bevorzugt erhalten oder erhältlich aus einem kombinierten Prozess gemäß dem zweiten Aspekt der Erfindung. Alle Details, Ausführungsformen und bevorzugten Ausführungsformen, die hier voranstehend zum Verfahren des ersten Aspektes der Erfindung beschrieben sind und alle Details, Ausführungsformen und bevorzugten Ausführungsformen, die hier voranstehend zum kombinierten Prozess des zweiten Aspektes der Erfindung beschrieben sind, gelten ebenso für die Mischung des dritten Aspekts der Erfindung.

4. Aspekt - Verwendung

Ein vierter Aspekt der Erfindung betrifft die Verwendung der Mischung gemäß des dritten Aspektes der Erfindung als Weichmacher in der Herstellung polymerer Materialien. Bevorzugt ist das polymere Material ausgewählt aus der Gruppe bestehend aus geformtem Körper, Handschuh, Folie, Tapete, Bodenbelag und Textil.

Alle Details, Ausführungsformen und bevorzugten Ausführungsformen, die hier voranstehend zum Verfahren des ersten Aspektes der Erfindung beschrieben sind und alle Details, Ausführungsformen und bevorzugten Ausführungsformen, die hier voranstehend zum kombinierten Prozess des zweiten Aspektes der Erfindung beschrieben sind, sowie alle Details, Ausführungsformen und bevorzugten Ausführungsformen, die hier voranstehend zur Mischung des dritten Aspektes der Erfindung beschrieben sind gelten ebenso für die Verwendung des vierten Aspekts der Erfindung.

5. Aspekt - Methode zur Herstellung eines Weichmacher enthaltenden polymeren Materials

In einem fünften Aspekt bezieht sich die Erfindung auf eine Methode zur Herstellung eines Weichmacher enthaltenden polymeren Materials umfassend:

(I) Bereitstellen eines Polymers und einer Mischung gemäß des dritten Aspektes der Erfindung wie hier voranstehend beschrieben;
(II) Vermischen von gemäß (I) bereitgestelltem Polymer und bereitgestellter Mischung unter Erhalt einer Verarbeitungsmischung V;
(III) Verarbeiten von V mittels Kalandrieren, Extrusion und/oder Spritzguss.

Die gemäß (I) bereitgestellten Polymere sind wie oben im Bereich zum ersten bzw. zweiten Aspekt der Erfindung genannt.
Alle Details, Ausführungsformen und bevorzugten Ausführungsformen, die hier voranstehend zum Verfahren des ersten Aspektes der Erfindung beschrieben sind, alle Details, Ausführungsformen und bevorzugten Ausführungsformen, die hier voranstehend zum kombinierten Prozess des zweiten Aspektes der Erfindung beschrieben sind, und alle Details, Ausführungsformen und bevorzugten Ausführungsformen, die hier voranstehend zur Mischung des dritten Aspektes der Erfindung beschrieben sind, sowie alle Details, Ausführungsformen und bevorzugten Ausführungsformen, die hier voranstehend zur Verwendung des vierten Aspektes der Erfindung beschrieben sind, gelten ebenso für die Methode des fünften Aspekts der Erfindung.

6. Aspekt - Methode zur Herstellung eines Weichmacher enthaltenden Plastisols

Ein sechster Aspekt der Erfindung betrifft eine Methode zur Herstellung eines Weichmacher enthaltenden Plastisols umfassend:

(I) Bereitstellen eines Polymers und einer Mischung gemäß des dritten Aspektes der Erfindung wie hier voranstehend beschrieben;
(II) Vermischen von gemäß (I) bereitgestelltem Polymer und bereitgestellter Mischung unter Erhalt einer Verarbeitungsmischung V;
(III) Verarbeiten von V mittels Streichen, Rakeln, Tauchen und/oder Rotationsspritzguß.

Die gemäß (I) bereitgestellten Polymere sind wie oben im Bereich zum ersten bzw. zweiten Aspekt der Erfindung genannt.
Alle Details, Ausführungsformen und bevorzugten Ausführungsformen, die hier voranstehend zum Verfahren des ersten Aspektes der Erfindung beschrieben sind, alle Details, Ausführungsformen und bevorzugten Ausführungsformen, die hier voranstehend zum kombinierten Prozess des zweiten Aspektes der Erfindung beschrieben sind, und alle Details, Ausführungsformen und bevorzugten Ausführungsformen, die hier voranstehend zur Mischung des dritten Aspektes der Erfindung beschrieben sind, sowie alle Details, Ausführungsformen und bevorzugten Ausführungsformen, die hier voranstehend zur Verwendung des vierten Aspektes der Erfindung beschrieben sind, gelten ebenso für die Methode des sechsten Aspekts der Erfindung.

7. Aspekt - Polymeres Material (mit Mischung M2 als Weichmacher)

In einem siebten Aspekt bezieht sich die Erfindung auf ein polymeres Material enthaltend ein Polymer und eine Mischung gemäß des dritten Aspektes der Erfindung wie hier voranstehend beschrieben als Weichmacher, vorzugweise erhalten oder erhältlich aus der Methode gemäß dem fünften Aspekt der Erfindung.
Alle Details, Ausführungsformen und bevorzugten Ausführungsformen, die hier voranstehend zum Verfahren des ersten Aspektes der Erfindung beschrieben sind, alle Details, Ausführungsformen und bevorzugten Ausführungsformen, die hier voranstehend zum kombinierten Prozess des zweiten Aspektes der Erfindung beschrieben sind, alle Details, Ausführungsformen und bevorzugten Ausführungsformen, die hier voranstehend zur Mischung des dritten Aspektes der Erfindung beschrieben sind, und alle Details, Ausführungsformen und bevorzugten Ausführungsformen, die hier voranstehend zur Verwendung des vierten Aspektes der Erfindung beschrieben sind, sowie alle Details, Ausführungsformen und bevorzugten Ausführungsformen, die hier voranstehend zur Methode des fünften Aspektes der Erfindung beschrieben sind gelten ebenso für das polymere Material des siebten Aspekts der Erfindung.

8. Aspekt - Plastisol (mit Mischung M2 als Weichmacher)

Ein achter Aspekt der Erfindung betrifft ein Plastisol enthaltend ein Polymer und eine Mischung gemäß des dritten Aspektes der Erfindung wie hier voranstehend beschrieben als Weichmacher, vorzugweise erhalten oder erhältlich aus der Methode gemäß des sechsten Aspektes der Erfindung wie hier voranstehend beschrieben.

Alle Details, Ausführungsformen und bevorzugten Ausführungsformen, die hier voranstehend zum Verfahren des ersten Aspektes der Erfindung beschrieben sind, alle Details, Ausführungsformen und bevorzugten Ausführungsformen, die hier voranstehend zum kombinierten Prozess des zweiten Aspektes der Erfindung beschrieben sind, alle Details, Ausführungsformen und bevorzugten Ausführungsformen, die hier voranstehend zur Mischung des dritten Aspektes der Erfindung beschrieben sind, und alle Details, Ausführungsformen und bevorzugten Ausführungsformen, die hier voranstehend zur Verwendung des vierten Aspektes der Erfindung beschrieben sind, sowie alle Details, Ausführungsformen und bevorzugten Ausführungsformen, die hier voranstehend zur Methode des fünften Aspektes der Erfindung beschrieben sind gelten ebenso für das Plastisol des achten Aspekts der Erfindung.

Die vorliegende Erfindung wird durch die folgenden Ausführungsformen und Kombinationen von Ausführungsformen, die sich aus den angegebenen Abhängigkeiten und Rückbezügen ergeben, näher erläutert. Insbesondere wird darauf hingewiesen, dass in jedem Fall, in dem ein Bereich von Ausführungsformen erwähnt wird, z. B. im Zusammenhang mit einem Begriff wie "Das Verfahren nach einer der Ausführungsformen 1 bis 4", jede Ausführungsform in diesem Bereich für den Fachmann explizit offenbart werden soll, d. h. der Wortlaut dieses Begriffs ist vom Fachmann als Synonym für "Das Verfahren nach einer der Ausführungsformen 1, 2, 3 und 4" zu verstehen. Ferner wird ausdrücklich darauf hingewiesen, dass die nachfolgende Ausführungsform einen geeignet strukturierten Teil der allgemeinen Beschreibung darstellen, der sich auf bevorzugte Aspekte der vorliegenden Erfindung bezieht, und somit die Ansprüche der vorliegenden Erfindung in geeigneter Weise unterstützt, aber nicht darstellt.

1. Verfahren zur Umesterung einer Weichmachermischung umfassend:

(a) Bereitstellen einer ersten Mischung von Weichmachern (M1), umfassend einen Phthalsäure-basierten Weichmacher und mindestens einen Weichmacher, der auf einer von Phthalsäure unterschiedlichen Säure basiert;
(b) Bereitstellen eines Alkohols $C_nH_{2n+1}OH$ (A), wobei n ein Integer aus dem Bereich von 9 bis 15 ist;

(i) Kontaktieren der Mischung von Weichmachern M1 gemäß (a) mit dem Alkohol A gemäß (b) in Gegenwart eines Umesterungskatalysators unter Bedingungen, die eine Umesterung der in der Mischung M1 enthaltenen Weichmacher erlauben, unter Erhalt einer zweiten Mischung von Weichmachern (M2), wobei die Zusammensetzung von M2 und die Zusammensetzung von M1 unterschiedlich sind.

2. Verfahren gemäß Ausführungsform 1, wobei der Phthalsäure-basierter Weichmacher ausgewählt ist aus der Gruppe bestehend aus Dibutylphthalat (DBP), Dioctylphthalat (DOP), Diethylhexylphthalat (DEHP), Benzylbutylphthalat (BBP), Diisobutylphthalat (DIBP), Dipentylphthalat (DPP), Diisopentylphthalat, n-Pentylisopentylphthalat, Dihexylphthalat, Diisoheptylphthalat (DiHP), Diisononylphthalat (DINP), und Mischungen von zwei oder mehr davon; bevorzugt aus der Gruppe bestehend aus Dibutylphthalat (DBP), Dioctylphthalat (DOP), Diethylhexylphthalat (DEHP), Diisobutylphthalat (DIBP), Diisononylphthalat (DINP), Benzylbutylphthalat (BBP), und Mischungen von zwei oder mehr davon.

3. Verfahren gemäß Ausführungsform 1 oder 2, wobei die von Phthalsäure unterschiedliche Säure ausgewählt ist aus der Gruppe bestehend aus Adipinsäure, Terephthalsäure, 1,2-Cyclohexandicarbonsäure, 1,4-Cyclohexandicarbonsäure, Benzoesäure, Dibenzoesäure, Zitronensäure, Fettsäure, epoxidierte Fettsäure und Mischungen von zwei oder mehr dieser Säuren, wobei die Fettsäure bzw. epoxidierte Fettsäure bevorzugt ausgewählt aus der Gruppe bestehend aus Palmitinsäure, epoxidierter Palmitinsäure, Stearinsäure, epoxidierter Stearinsäure, Ölsäure, epoxidierter Ölsäure, Linolsäure, epoxidierter Linolsäure, Linolensäure, epoxidierter Linolensäure, Palmitoleinsäure, epoxidierter Palmitoleinsäure, Arachidinsäure, epoxidierter Arachidinsäure, und Mischungen von zwei oder mehr dieser Säuren.

4. Verfahren gemäß einer der Ausführungsformen 1 bis 3, wobei der Weichmacher, der auf einer von Phthalsäure unterschiedlichen Säure basiert, ausgewählt ist aus der Gruppe bestehend aus 1,2-Cyclohexandicarbonsäurediisononylester (DINCH), 1,2-Cyclohexandicarbonsäure-di-2-ethylhexylester, Di (2-ethylhexyl)adipat (DOA), Diethylenglykoldibenzoat, Di (2-ethylhexyl)terephthalat (DOTP) epoxidiertes Sojabohnenöl (ESBO), epoxidiertes Leinsamenöl (ELO), und Mischungen von zwei oder mehr davon.

5. Verfahren gemäß einer der Ausführungsformen 1 bis 4, wobei die erste Mischung von Weichmachern (M1) erhalten oder erhältlich ist aus einer Extraktion eines polymeren Materials mit einem Lösungsmittel, wobei das polymere Material ein Polymer, einen Phthalsäure-basierten Weichmacher und mindestens einen Weichmacher, der auf einer von Phthalsäure unterschiedlichen Säure basiert, umfasst, wobei das zur Extraktion eingesetzte oder einsetzbare Lösungsmittel bevorzugt ein Lösungsmittel ausgewählt aus der Gruppe bestehend aus C5 bis C10 cyclischer Carbonsäureester (Lacton), C3 bis C10 Keton, und Mischungen von zwei oder mehr dieser Verbindungen umfasst.

6. Verfahren gemäß einer der Ausführungsformen 1 bis 5, wobei der Index n des gemäß (b) bereitgestellten Alkohols A ein Integer aus dem Bereich von 9 bis 12 ist.

7. Verfahren nach einer der Ausführungsformen 1 bis 6, wobei der Alkohol A bevorzugt ausgewählt ist aus der Gruppe bestehend aus linearem $C_9H_{19}OH$, verzweigtem $C_9H_{19}OH$, linearem $C_{10}H_{21}OH$, verzweigtem $C_{10}H_{21}OH$, linearem $C_{11}H_{23}OH$, verzweigtem $C_{11}H_{23}OH$, linearem $C_{12}H_{25}OH$, verzweigtem $C_{12}H_{25}OH$, und Mischungen von zwei oder mehr dieser Alkohole; wobei der Alkohol A bevorzugt mindestens verzweigtes verzweigtem $C_9H_{19}OH$ oder $C_{10}H_{21}OH$, weiter bevorzugt mindestens 2-Propylheptanol und/oder Isononanol, umfasst.

8. Verfahren nach einer der Ausführungsformen 1 bis 7, wobei der Umesterungskatalysator einen Lewis-Säure-Umesterungskatalysator und/oder einen Brönstedt-Säure-Umesterungskatalysator umfasst, bevorzugt einen Umesterungskatalysator ausgewählt ist aus der Gruppe bestehend aus Schwefelsäure, para-Toluolsulfonsäure, Titan basiertem Umesterungskatalysator, und Mischungen von zwei oder mehr davon, wobei der Titan basierte Umesterungskatalysator bevorzugt ausgewählt ist aus der Gruppe bestehend aus Tetra-iso-propyltitanat, Tetra-n-butyltitanat und Mischungen von Tetra-iso-propyltitanat und Tetra-n-butyltitanat.

9. Verfahren nach einer der Ausführungsformen 1 bis 8, wobei die zweite Mischung von Weichmachern M2 Ester des Alkohols A mit Phthalsäure und Ester des Alkohols A mit der von Phthalsäure unterschiedlichen Säure umfasst, bevorzugt Ester, in welchen alle Säuregruppen der Phthalsäure mit Alkohol A verestert sind und Ester, in welchen alle Säuregruppen der von Phthalsäure unterschiedlichen Säure mit Alkohol A verestert sind, weiter bevorzugt bestehen mindestens 90 Gewichts-%, weiter bevorzugt mindestens 95 Gewichts-% der Mischung M2 aus Estern, in welchen alle Säuregruppen der Phthalsäure mit Alkohol A verestert sind und Estern, in welchen alle Säuregruppen der von Phthalsäure unterschiedlichen Säure mit Alkohol A verestert sind.

10. Verfahren nach einer der Ausführungsformen 1 bis 9, wobei das Kontaktieren in Schritt (i) in einem molaren Verhältnis der Summe an Phthalsäure-basiertem Weichmacher und Weichmacher, der auf einer von Phthalsäure unterschiedlichen Säure basiert, zum Alkohol A im Bereich von 1:100 bis 1:2, bevorzugt im Bereich von 1:50 bis 1:2, weiter bevorzugt im Bereich von 1:10 bis 1:2.

11. Verfahren nach einer der Ausführungsformen 1 bis 10, wobei das Kontaktieren in Schritt (i) in einem gewichtsbasierten Verhältnis der Gesamtmasse an Phthalsäure-basiertem Weichmacher und Weichmacher, der auf einer von Phthalsäure unterschiedlichen Säure basiert, zur Masse des Umesterungskatalysators im Bereich von 100:1 bis 100:0,01, bevorzugt im Bereich von 100:0,1 bis 100:0,02, weiter bevorzugt im Bereich von 100:0,8 bis 100:0,03, erfolgt.

12. Verfahren nach einer der Ausführungsformen 1 bis 11, wobei das Kontaktieren in Schritt (i) unter Schutzgasatmosphäre, bevorzugt unter Stickstoff, erfolgt.

13. Verfahren nach einer der Ausführungsformen 1 bis 12, wobei Schritt (i) umfasst:

(i.1) Erzeugen einer Reaktionsmischung aus Mischung M1, Alkohol A und Umesterungskatalysator;
(i.2) Erwärmen der Reaktionsmischung aus (i.1) auf eine Temperatur T, die der Siedetemperatur des Alkohols A $\pm$ 5 K entspricht, vorzugsweise bei einem Druck p1;
(i.3) Halten der Reaktionsmischung bei einer Temperatur T2 mit T2 = T1$\pm$ 10 K für eine Zeitspanne t unter Absenkung des Druckes von p1 auf einen Druck p2 mit p2 < p1, unter Erhalt einer zweiten Mischung von Weichmachern (M2), wobei die Zusammensetzung von M2 und die Zusammensetzung von M1 unterschiedlich sind.

14. Verfahren nach Ausführungsform 13, wobei der Druck p1 im Bereich von 500 bis 1500 hPa, bevorzugt im Bereich von 800 bis 1200 hPa, liegt und/oder p2 im Bereich von 0,95 x p1 bis 0,05 x p1, bevorzugt im Bereich von 0,9 x p1 bis 0,1 x p1, liegt.

15. Verfahren nach Ausführungsform 13 oder 14, wobei die Zeitspanne t mindestens eine Stunde, bevorzugt im Bereich von 1 bis 72 Stunden, weiter bevorzugt im Bereich von 5 bis 48 Stunden, beträgt.

16. Verfahren nach einer der Ausführungsformen 13 bis 15, wobei mindestens 90 Gewichts-%, bevorzugt mindestens 95 Gewichts-%, weiter bevorzugt mindestens 99 Gewichts-% der gemäß (i.1) erzeugten Reaktionsmischung aus Mischung M1, Alkohol A und Umesterungskatalysator bestehen.

17. Verfahren nach einer der Ausführungsformen 13 bis 16, wobei die gemäß (i.1) erzeugte Reaktionsmischung weniger als 1 Gewichts-% an weiteren organischen Lösungsmitteln, bezogen auf das Gesamtgewicht der Reaktionsmischung von 100 Gewichts-%, enthält, wobei die Gruppe der weiteren organischen Lösungsmittel nicht einen Alkohol A umfasst.

18. Verfahren nach einer der Ausführungsformen 1 bis 17, wobei die Mischung von Weichmachern (M1) bzw. die gemäß (i.1) erzeugte Reaktionsmischung als Weichmacher, der auf einer von Phthalsäure unterschiedlichen Säure basiert, mindestens epoxidiertes Sojabohnenöl (ESBO) und/oder epoxidiertes Leinsamenöl (ELO) umfasst.

19. Verfahren nach einer der Ausführungsformen 13 bis 18, wobei die gemäß (i.1) erzeugte Reaktionsmischung weniger als 1 Gewichts-% an weiteren organischen Lösungsmitteln, bezogen auf das Gesamtgewicht der Reaktionsmischung von 100 Gewichts-%, enthält, wobei die Gruppe der weiteren organischen Lösungsmittel nicht einen Alkohol A umfasst.

20. Verfahren nach einer der Ausführungsformen 13 bis 19, wobei mindestens 90 Gewichts-%, bevorzugt mindestens 95 Gewichts-%, weiter bevorzugt mindestens 99 Gewichts-% der gemäß (i.1) erzeugten Reaktionsmischung aus Mischung M1, Alkohol A und Umesterungskatalysator bestehen.

21. Verfahren nach einer der Ausführungsformen 13 bis 20, wobei die zweite Mischung von Weichmachern (M2) Ester des Alkohols A mit Phthalsäure, und mindestens einen Ester des Alkohols A mit epoxidierter Linolsäure umfasst.

22. Kombinierter Prozess umfassend

(A) Weichmacherextraktion aus einem polymeren Material unter Erhalt einer Mischung von Weichmachern (M1), umfassend einen Phthalsäure-basierten Weichmacher und mindestens einen Weichmacher, der auf einer von Phthalsäure unterschiedlichen Säure basiert;
(B) Umesterung der aus (A) erhaltenen Mischung von Weichmachern (M1),

wobei (A) umfasst:

(A.a) Bereitstellen eines polymeren Materials, das ein Polymer, einen Phthalsäure-basierten Weichmacher und mindestens einen Weichmacher, der auf einer von Phthalsäure unterschiedlichen Säure basiert, umfasst, und Bereitstellen eines Lösungsmittels;
(A.i) Kontaktieren des polymeren Materials mit dem Lösungsmittel, wodurch eine flüssige Mischung erhalten wird, welche das Lösungsmittel, gelöstes Polymer und die Weichmacher umfasst;
(A.ii) Ausfällen des Polymers aus der flüssigen Mischung aus (A.i) durch Zusatz eines Anti-Lösungsmittels, unter Erhalt einer flüssigen Phase, die Lösungsmittel, Anti-Lösungsmittel und Weichmacher enthält, und eines festen Rückstandes, der das Polymer enthält;
(A.iii) Separation von festem Rückstand und flüssiger Phase;
(A.iv) Separation von Lösungsmittel, Anti-Lösungsmittel und Weichmachern durch Destillation, wodurch eine vorzugsweise flüssige Mischung (M1) erhalten wird, die den Phthalsäure-basierten Weichmacher und den mindestens einen Weichmacher, der auf einer von Phthalsäure unterschiedlichen Säure basiert, umfasst, und eine oder mehrere flüssige Fraktionen, die das Lösungsmittel und/oder das Anti-Lösungsmittel umfassen;

wobei (B) umfasst:
(B.i) Kontaktieren der aus (A.iv) erhaltenen Mischung von Weichmachern M1 mit einem Alkohol $C_nH_{2n+1}OH$ (A), wobei n ein Integer aus dem Bereich von 9 bis 15 ist, in Gegenwart eines Umesterungskatalysators unter Bedingungen, die eine Umesterung der in der Mischung von Weichmachern enthaltenen Weichmacher erlauben, unter Erhalt einer zweiten Mischung von Weichmachern (M2), wobei die Zusammensetzung von M2 von der von M1 unterschiedlich ist.

23. Prozess nach Ausführungsform 22, wobei das Lösungsmittel gemäß (A.a) ausgewählt ist aus der Gruppe bestehend aus C5 bis C10 cyclischer Carbonsäureester (Lacton), C3 bis C10 Keton und Mischungen von zwei oder mehr dieser Verbindungen.

24. Prozess nach Ausführungsform 22 oder 23, wobei das Polymer des polymeren Materials gemäß (A.a) ein thermoplastisches Polymer umfasst oder ist, bevorzugt ausgewählt aus der Gruppe bestehend aus

- thermoplastischem Copolymer, welches in polymerisierter Form mindestens zwei verschiedene Monomere umfasst, wobei die Monomere ausgewählt sind aus der Gruppe bestehend aus C2- bis C10-Monoolefin (vorzugsweise ausgewählt aus der Gruppe bestehend aus Ethylen, Propylen, 1,3-Butadien, 2-Chlor-1,3-butadien und Mischungen aus zwei oder mehr dieser Olefine), Vinylalkohol, C2 bis C10-Alkylester des Vinylalkohols, Vinylacetat, Vinylchlorid, Vinylidenchlorid, Vinylidenfluorid, Tetrafluorethylen, Glycidylacrylat, Glycidylmethacrylat, Acrylat mit Alkoholkomponente von verzweigtem oder unverzweigtem C1 bis C10 Alkoholmethacrylat mit Alkoholbestandteilen von verzweigtem oder unverzweigtem C1 bis C10 Alkohol, aromatisches Vinyl (vorzugsweise Styrol), (Meth)acrylnitril, ethylenisch ungesättigte Mono- oder Dicarbonsäure und Maleinsäureanhydrid (TP.1);

- Polyvinylester (TP.2);

- Polycarbonat (TP.3);

- Polyether (TP.4);

- Polyetherketon (TP.5);

- thermoplastisches Polyurethan (TP.6);

- Polysulfid (TP.7);

- Polysulfon (TP.8);

- Polyester (TP.9);

- Polyalkylenterephthalat (TP.10);

- Polyhydroxyalkanoat (TP.11);

- Polybutylensuccinat (TP.12);

- Polybutylensuccinatadipat (TP.13);

- Polyacrylat mit gleichen oder unterschiedlichen Alkoholrückständen aus der Gruppe der C4- bis C8-Alkohole, vorzugsweise ausgewählt aus Butanol, Hexanol, Octanol und 2-Ethylhexanol (TP.14);

- Polymethylmethacrylat (TP.15);

- Methylmethacrylat-Butylacrylat-Copolymer (TP.16);

- Acrylnitril-Butadien-Styrol-Copolymer (TP.17);

- Ethylen-Propylen-Copolymer (TP.18);

- Ethylen-Propylen-Dien-Copolymer (TP.19);

- Polystyrol (TP.20);

- Styrol-Acrylnitril-Copolymer (TP.21);

- Acrylnitril-Styrol-Acrylat (TP.22);

- Styrol-Butadien-Methylmethacrylat-Copolymer (TP.23);

- Styrol-Maleinsäureanhydrid-Copolymer (TP.24);

- Styrol-Methacrylsäure-Copolymer (TP.25);

- Polyoxymethylen (TP.26);

- Polyvinylalkohol (TP.27);

- Polyvinylacetat (TP.28);

- Polyvinylbutyral (TP.29);

- Polyvinylchlorid (TP.30);

- Polycaprolacton (TP.31);

- Polyhydroxybuttersäure (TP.32);

- Polyhydroxyvaleriansäure (TP.33);

- Polymilchsäure (TP.34);

- Ethylcellulose (TP.35);

- Celluloseacetat (TP.36);

- Cellulosepropionat (TP.37);

- Celluloseacetat/Butyrat (TP.38)

und Mischungen aus zwei oder mehr dieser Polymere.

25. Prozess nach einer der Ausführungsformen 22 bis 24, wobei das Polymer des polymeren Materials gemäß (A.a) ein thermoplastisches Polymer umfasst oder ist, ausgewählt aus der Gruppe bestehend aus TP.1 bis TP.9 und TP.11 bis TP.38 und Mischungen aus zwei oder mehr dieser Polymere, weiter bevorzugt ausgewählt aus der Gruppe bestehend aus TP.1 bis TP.8 und TP.11 bis TP.38 und Mischungen aus zwei oder mehr dieser Polymere.

26. Prozess nach einer der Ausführungsformen 22 bis 25, wobei das Polymer des polymeren Materials gemäß (A.a) ausgewählt ist aus der Gruppe bestehend aus Copolymer, das in polymerisierter Form Vinylchlorid umfasst, und mindestens einem weiteren Monomer, ausgewählt aus der Gruppe bestehend aus C2 bis C10 Monoolefin (bevorzugt ausgewählt aus der Gruppe bestehend aus Ethylen, Propylen, 1,3-Butadien, 2-Chlor-1,3-butadien und Gemischen aus zwei oder mehr dieser Olefine), Vinylalkohol, C2- bis C10-Alkylester von Vinylalkohol, Vinylacetat, Vinylidenchlorid, Vinylidenfluorid, Tetrafluorethylen, Glycidylacrylat, Glycidylmethacrylat, Acrylat mit Alkoholkomponente von verzweigtem oder unverzweigtem C1- bis C10-Alkoholmethacrylat mit Alkoholbestandteilen von verzweigtem oder unverzweigtem C1- bis C10-Alkohol, aromatisches Vinylbenzol (vorzugsweise Styrol), (Meth)acrylnitril, ethylenisch ungesättigte Mono- oder Dicarbonsäure und Maleinsäureanhydrid, besonders bevorzugt ein Copolymer, das in polymerisierter Form Vinylchlorid und mindestens Vinylacetat (TP.1.1) enthält; Polyvinylacetat (TP.28); Polyvinylbutyral (TP.29); Polyvinylchlorid (TP.30); Polycaprolacton (TP.31); und Mischungen aus zwei oder mehr dieser Polymere.

27. Prozess nach einer der Ausführungsformen 22 bis 26, wobei Polymer des polymeren Materials gemäß (A.a) mindestens Polyvinylchlorid (TP.30) umfasst, wobei bevorzugt mindestens 90 Gewichts-%, mehr bevorzugt mindestens 95 Gewichts-%, mehr bevorzugt mindestens 98 Gewichts-% des in dem polymeren Materials gemäß (A.a) enthaltenen Polymers Polyvinylchlorid sind, basierend auf dem Gesamtgewicht des Polymers, das in dem Polymermaterial enthalten ist, welches 100 Gewichts-% beträgt.

28. Prozess nach einer der Ausführungsformen 22 bis 27, wobei mindestens 20 Gewichts-%, mehr bevorzugt im Bereich von 20 bis 90 Gewichts-%, des polymeren Materials gemäß (A.a) aus dem Polymer bestehen, wobei das Gesamtgewicht des polymeren Materials 100 Gewichts-% beträgt.

29. Prozess nach einer der Ausführungsformen 22 bis 28, wobei das gemäß (A.a) bereitgestellte polymere Material weiterhin ein Metallkation enthaltendes Additiv umfasst, wobei Schritt (A.i) umfasst:

(A.i.1) Kontaktieren des polymeren Materials mit dem Lösungsmittel, wodurch eine flüssige Mischung erhalten wird, welche das Lösungsmittel, gelöstes Polymer und die Weichmacher umfasst, und ein fester Rückstand, welcher zumindest einen Teil des Metallkation enthaltenden Additivs umfasst;
(A.i.2) Abtrennen der nach (A.i.1) erhaltenen flüssigen Mischung vom festen Rückstand, bevorzugt mittels Filtration, wodurch eine separierte flüssige Mischung erhalten wird, welche das Lösungsmittel, gelöstes Polymer und die Weichmacher umfasst, und eines separierten festen Rückstands, der den ungelösten Teil des Metallkation enthaltenden Additivs umfasst;

und wobei (A.ii') umfasst:
(A.ii') Ausfällen des Polymers aus der separierten flüssigen Mischung aus (A.i.2) unter Zusatz eines Anti-Lösungsmittels, unter Erhalt einer flüssigen Phase, die Lösungsmittel, Anti-Lösungsmittel und Weichmacher enthält und eines festen Rückstandes, der das Polymer enthält.

30. Prozess nach Ausführungsform 29, wobei das in dem Additiv enthaltene Metallkation ein Metallkation mit einer Ladung von $\geq 2$ ist, bevorzugt ausgewählt aus der Gruppe bestehend aus zweiwertigem Metallkation, dreiwertigem Metallkation, vierwertigem Metallkation und Mischungen aus zwei oder mehr davon, wobei das in dem Additiv enthaltene Metallkation weiter bevorzugt aus der Gruppe ausgewählt ist, die aus $Sn^{4+}$, $Zn^{2+}$, $Ba^{2+}$, $Cd^{2+}$, $Ca^{2+}$, $Pb^{2+}$, $Mg^{2+}$, $Al^{3+}$ und Mischungen aus zwei oder mehr dieser Metallkationen besteht, weiter bevorzugt aus der Gruppe bestehend aus $Cd^{2+}$, $Pb^{2+}$, $Zn^{2+}$, $Ba^{2+}$ und Mischungen aus zwei oder mehr dieser Metallkationen, weiterbevorzugt aus der Gruppe bestehend aus $Cd^{2+}$, $Pb^{2+}$ und Mischungen aus $Cd^{2+}$ und $Pb^{2+}$ oder aus der Gruppe bestehend aus $Zn^{2+}$, $Ba^{2+}$ und Mischungen aus $Zn^{2+}$ und $Ba^{2+}$.

31. Prozess nach Ausführungsform 29 oder 30, wobei das Metallkation enthaltenden Additiv ausgewählt ist aus der Gruppe bestehend aus Zinn(IV)-mercaptid, Zinn(IV)-sulfidorganischer Verbindung, Zinn(IV)-carboxylat, substituiertem oder unsubstituiertem Barium(II)-phenolat, Barium(II)-Salz einer Carbonsäure, Cadmium(II)-Salz einer Carbonsäure, Calcium(II)-Salz einer Carbonsäure besteht, Aluminium(III)-Salz einer Carbonsäure, Zink(II)-Salz einer Carbonsäure, substituiertes oder unsubstituiertes Zink(II)-phenolat, Blei(II)-sulfat, Blei(II)-phosphit, Blei(II)-carbonat, Blei(II)-salz einer Carbonsäure, Magnesium(II)-Salz einer Carbonsäure, Hydroxidcarbonathydrat aus zwei oder mehr Metallkationen und Mischungen aus zwei oder mehr dieser Verbindungen, bevorzugt aus der Gruppe bestehend aus Aluminiumstearat, Bariumlaurat, Bariumstearat, Cadmiumlaurat, Cadmiumstearat, Calciumlaurat, Calciumstearat, Bleistearat [$Pb(OOC-C_{17}H_{35})_2$], zweibasischem Bleistearat [$2PbO. Pb(OOC-C_{17}H_{35})_2$], dreibasisches Bleisulfat ($3PbO \cdot PbSO_4 \cdot H_2O$), tetrabasisches Bleisulfat ($4PbO \cdot PbSO_4$)), zweibasisches Bleiphthalat, basischem Bleicarbonat und Mischungen aus zwei oder mehr dieser Verbindungen.

32. Prozess nach einer der Ausführungsformen 29 bis 31, wobei das polymere Material das Metallkation enthaltenden Additiv in einer Menge im Bereich von 0,05 bis 7 Gew.-%, bevorzugt im Bereich von 0,1 bis 5 Gew.-%, weiter bevorzugt im Bereich von 0,5 bis 3 Gew.-%, bezogen auf das Gesamtgewicht des polymeren Materials von 100 Gew.-%, enthält.

33. Prozess nach einer der Ausführungsformen 22 bis 32, wobei das Kontaktieren in Schritt (A.i) bzw. (A.i.1) mit dem Lösungsmittel bei einer Temperatur T1 unter 190 °C, bevorzugt unter 180 °C, weiter bevorzugt unter 170 °C, weiter bevorzugt bei einer Temperatur T1 im Bereich von 90 bis < 170 °C, weiter bevorzugt eine Temperatur T1 im Bereich von 95 bis 165 °C, weiter bevorzugt eine Temperatur T1 im Bereich von 100 bis 150 °C, erfolgt.

34. Prozess nach einer der Ausführungsformen 22 bis 33, wobei das Kontaktieren in Schritt (A.i) bzw. (A.i.1) mit dem Lösungsmittel für einen Zeitraum von mindestens 0,1 h, bevorzugt für einen Zeitraum im Bereich von 0,1 bis 10 h, bevorzugt für einen Zeitraum im Bereich von 0,1 bis 6 h, bevorzugt für einen Zeitraum im Bereich von 0,1 bis 4 h, erfolgt.

35. Prozess nach einer der Ausführungsformen 22 bis 34, wobei das Kontaktieren in Schritt (A.i) bzw. (A.i.1) mit dem Lösungsmittel bei einem Druck im Bereich von 800 bis 200.000 hPa erfolgt.

36. Prozess nach einer der Ausführungsformen 22 bis 35, wobei das Kontaktieren in Schritt (A.i) bzw. (A.i.1) mit dem Lösungsmittel mit einem massenbasierten Verhältnis Polymermaterial: Lösungsmittel im Bereich von 1:1 bis 1:100, bevorzugter im Bereich von 1:1 bis 1:20, mehr bevorzugt im Bereich von 1:1 bis 1:10, erfolgt.

37. Prozess nach einer der Ausführungsformen 29 bis 36, wobei das Abtrennen der nach (A.i.1) erhaltenen flüssigen Mischung vom festen Rückstand in Schritt (A.i.2) mittels erhitzter Filtration, mehr bevorzugt durch erhitzte Filtration bei einer Temperatur im Bereich von T1 $\pm$ 20°C, mehr bevorzugt durch erhitzte Filtration bei einer Temperatur im Bereich von T1 $\pm$ 10°C, erfolgt.

38. Prozess nach einer der Ausführungsformen 22 bis 37, wobei das Ausfällen des Polymers aus der flüssigen Mischung aus (A.i) bzw. (A.i.2) in (A.ii) umfasst:

(A.ii.1) Einstellen der Temperatur der flüssigen Mischung aus (A.i) bzw. (A.i.2) auf eine Temperatur T2, die unter T1 liegt, vorzugsweise eine Temperatur im Bereich von 10 °C bis 100 °C, mehr bevorzugt eine Temperatur im Bereich von 15 bis 90 °C, mehr bevorzugt im Bereich von 20 bis 80 °C;
(A.ii.2) Ausfällung des Polymers aus der flüssigen Mischung aus (A.i) bzw. (A.i.2) bei T2 durch Zugabe eines Anti-Lösungsmittels.

39. Prozess nach einer der Ausführungsformen 22 bis 38, wobei die Separation von festem Rückstand und flüssiger Phase gemäß (A.iii) mittels eines Verfahrens ausgewählt aus der Gruppe der Fest-Flüssig-Trennverfahren, bevorzugt ausgewählt aus der Gruppe bestehend aus Filtration, Sedimentation, Zentrifugation und Mischtypen dieser Verfahren.

40. Prozess nach einer der Ausführungsformen 22 bis 39, wobei die Separation von festem Rückstand und flüssiger Phase gemäß (A.iii) umfasst:

(A.iii.1) Separation von festem Rückstand und flüssiger Phase, wodurch der feste Rückstand, der das Polymer umfasst, und die flüssige Phase, die das Lösungsmittel, das Anti-Lösungsmittel und den gelösten Weichmacher umfasst, erhalten wird;
(A.iii.2) gegebenenfalls Waschen des gemäß (A.iii.1) erhaltenen festen Rückstands mit einem Anti-Lösungsmittel;
(A.iii.3) Trocknen des gemäß (A.iii.1) erhaltenen festen Rückstands oder des gemäß (A.iii.2) erhaltenen gewaschenen festen Rückstands.

41. Prozess nach einer der Ausführungsformen 22 bis 40, wobei die Separation von Lösungsmittel, Anti-Lösungsmittel und Weichmachern durch Destillation gemäß (A.iv) bei einer Temperatur erfolgt, welche unterhalb der Siedetemperatur der flüssigen Mischung (M1) liegt.

42. Mischung aus Estern eines Alkohols $C_nH_{2n+1}OH$ (A), wobei n ein Integer aus dem Bereich von 9 bis 15 ist, mit Phthalsäure und Estern des Alkohols A mit einer von Phthalsäure unterschiedlichen Säure, bevorzugt erhalten oder erhältlich aus einem Verfahren gemäß einer der Ausführungsformen 1 bis 21 und/oder bevorzugt erhalten oder erhältlich aus einem Prozess gemäß einer der Ausführungsformen 22 bis 41.

43. Verwendung der Mischung gemäß Ausführungsform 42 als Weichmacher in der Herstellung polymerer Materialien.

44. Verwendung gemäß Ausführungsform 43, wobei das polymere Material ausgewählt ist aus der Gruppe bestehend aus geformtem Körper, Handschuh, Folie, Tapete, Bodenbelag und Textil.

45. Methode zur Herstellung eines Weichmacher enthaltenden polymeren Materials umfassend:

(I) Bereitstellen eines Polymers und einer Mischung gemäß Ausführungsform 42;
(II) Vermischen von gemäß (I) bereitgestelltem Polymer und bereitgestellter Mischung unter Erhalt einer Verarbeitungsmischung V;
(III) Verarbeiten von V mittels Kalandrieren, Extrusion und/oder Spritzguss.

46. Methode zur Herstellung eines Weichmacher enthaltenden Plastisols umfassend:

(I) Bereitstellen eines Polymers und einer Mischung gemäß Ausführungsform 42;
(II) Vermischen von gemäß (I) bereitgestelltem Polymer und bereitgestellter Mischung unter Erhalt einer Verarbeitungsmischung V;
(III) Verarbeiten von V mittels Streichen, Rakeln, Tauchen und/oder Rotationsspritzguß.

47. Polymeres Material enthaltend ein Polymer und eine Mischung gemäß Ausführungsform 42 als Weichmacher, vorzugweise erhalten oder erhältlich aus der Methode gemäß Ausführungsform 45.

48. Plastisol enthaltend ein Polymer und eine Mischung gemäß Ausführungsform 42 als Weichmacher, vorzugweise erhalten oder erhältlich aus der Methode gemäß Ausführungsform 46.

Die vorliegende Erfindung wird durch die folgenden Referenzbeispiele, Vergleichsbeispiele und Beispiele näher erläutert.

**BEISPIELE**

Chemikalien

| Einsatzstoffe | Beispielsweise kommerziell erhältlich | |
|---|---|---|
| | als | von |
| Homopolymeres Emulsions-PVC | Vinoflex S7114 | Inovyn Limited |
| Homopolymeres Suspensions-PVC | Inovyn 271 PC | Inovyn Limited |
| Ba-Zn Stabilisator | Baerostab® UBZ 760 XLP RF | Baerlocher Italia SPA. |
| Titan-Veresterungskatalysator | Tyzor TPT-20B | aber GmbH, Karlsruhe |
| Dibutylphthalat | | SigmaAldrich |
| Benzylbutylphthalat | | SigmaAldrich |
| Di-(2-Ethylhexyl) adipat | Plastomoll DOA | BASF SE |
| Di-2-Propylheptylphthalat | Palatinol 10P | BASF SE |
| Di-2-Propylheptyladipat | Synative ES DPHA | BASF SE |
| Di Isononylphthalat | Palatinol N | BASF SE |
| Di-2 (Ethylhexyl) terephthalat) | Palatinol DOTP | BASF Corp. |
| 2-Propylheptanol | | BASF SE |

Methoden

*1. Gaschromatographie*

Für die Gaschromatographie wurde ein Gaschromatograph von Fa. Agilent 6890series und als Säule Optima 5 Amin (Länge = 30m, Innendurchmesser = 0,25mm, Außendurchmesser = 0,40 mm, Filmdicke = 0,5mm) der Fa. Macherey&Nagel (Best.Nr. 726354.30) verwendet. Als Injektor diente ein Split/Splitless mit Topaz Split Precision Liner Whool der Fa. Restek (# 23305). Die Injektionsbedingungen waren: Injektortemperatur = 280°C, Injektionsvolumen = 1mL, Split 1:50, Splitflow 150mL/min, Septum Purge 3,0 mL/min (gemessen bei Ofentemp. 80°C). Als Trägergas diente Stickstoff 28PSI = 3,0mL/min (gemessen bei Ofentemp. 80 °C). Das Temperaturprogramm war: Start: 60°C, Verweildauer 1: 5min, Temperaturrampe 1: 8°C/min, Endtemperatur 1: 240°C, Verweildauer 2: 0min, Temperaturrampe 2: 30°C/min, Endtemperatur 2: 300°C, Verweildauer 3: 10min, Gesamtlaufzeit: 59,5min. Die Detektion erfolgte mittels FID mit 300mL/min Luft, 30mL/min Wasserstoff und 30ml/min Make-Up-Gas (Stickstoff) bei 320°C

**Vergleichsbeispiel 1 (VB1):Umesterung Di (2-ethylhexyl)adipat**

Ein 2,5 L Reaktorkessel ausgestattet mit einer Kolonne und einer Destillatrückführung mittels Flüssigkeitsteiler zurück auf den Kolonnenkopf wurde mit Di(2-ethylhexyl)adipat (DOA) (700 g, 1,89 mol, 1,0 Äquivalente, BASF), 2-Propylheptanol (897 g, 5,67 mol, 3,0 Äquivalente, BASF) und Tyzor TPT-20B (0,80 g, 0,05 Gewichts-%, abcr) befüllt. Unter einem milden Stickstoff-Strom wurde die Reaktionsmischung bis auf Rückfluss erhitzt (ca. 197 °C) und stetig die Temperatur erhöht, bis nach drei Stunden eine Innentemperatur von 214 °C erreicht wurde und der Druck auf 630 mbar abgesenkt wurde. Der Druck wurde bei gleichbleibender Temperatur über einen Zeitraum von 10 Stunden stetig reduziert bis 360 mbar. Nach 11 Stunden Reaktionszeit war bereits kein DOA mehr vorhanden und 96,8 GC-Flächen% von DPHA wurden gebildet. Um die restlichen geringen Mengen an gemischtem Ester umzusetzen, wurde die Temperatur auf 219 °C erhöht und für weitere 12 Stunden gehalten, wobei der Druck bis minimal 230 mbar reduziert wurde. Anschließend wurde nochmals 2-Propylheptanol hinzugegeben (90 g, 569 mmol) und die Umesterung für nochmals fünf Stunden fortgefahren bei einem Druck von anfangs 380 mbar bis letztendlich ein Druck von 280 mbar erreicht wurde. Zuletzt wurde das überschüssige 2-Propylheptanol abdestilliert, in dem der Druck noch bis 20 mbar abgesenkt wurde. Abschließend wurde eine Probe mittels GC analysiert. Edukte, Produkte und Umsatz nach GC-Flächen% sind in Tabelle 1 dargestellt.

**Vergleichsbeispiel 2 (VB2):Umesterung von Di (2-ethylhexyl)terephthalat (DOTP)**

Ein 2,5 L Reaktorkessel ausgestattet mit einer Kolonne und einer Destillatrückführung mittels Flüssigkeitsteiler zurück auf den Kolonnenkopf wurde mit Di (2-ethylhexyl)terephthalat (DOTP) (738 g, 1,89 mol, 1,0 Äquivalente, Aldrich), 2-Propylheptanol (897 g, 5,67 mol, 3,0 Äquivalente, BASF) und Tyzor TPT-20B (0,80 g, 0,05 Gewichts-%, abcr) befüllt. Unter einem milden Stickstoff-Strom wurde die Reaktionsmischung bis auf Rückfluss erhitzt (ca. 195 °C) und der Druck auf 640 mbar abgesenkt. Innerhalb von vier Stunden wurde die Temperatur stetig erhöht bis 219 °C und der Druck reduziert bis 620 mbar. Danach wurde die Temperatur konstant gehalten und der Druck minimiert bis nach weiteren fünf Stunden ein Druck von 430 mbar erreicht wurde. Nach 9 Stunden Reaktionszeit war bereits kein DOTP mehr vorhanden und 97,2 GC-Flächen% von DPHTP wurden gebildet. Um die restlichen geringen Mengen an gemischtem Ester umzusetzen, wurde die Reaktion weitere 18 Stunden durchgeführt, wobei die Temperatur konstant gehalten und der Druck stetig bis 180 mbar abgesenkt wurden. Zuletzt wurde das überschüssige 2-Propylheptanol abdestilliert, in dem der Druck noch bis 30 mbar abgesenkt wurde. Abschließend wurde eine Probe wurde mittels GC analysiert. Edukte, Produkte und Umsatz nach GC-Flächen% sind in Tabelle 1 dargestellt.

**Beispiel 1 (B1): Umesterung einer Mischung von Di (2-ethylhexyl)adipat (DOA), Di (2-ethylhexyl)terephthalat (DOTP) und Di (2-ethylhexyl)phthalat (DOP)**

Ein 2,5 L Reaktorkessel ausgestattet mit einer Kolonne und einer Destillatrückführung mittels Flüssigkeitsteiler zurück auf den Kolonnenkopf wurde mit Di (2-ethylhexyl)adipat (DOA) (360 g, 971 mmol, 45 Gewichts-%, BASF), Di (2-ethylhexyl)terephthalat (DOTP) (360 g, 922 mmol, 45 Gewichts-%, Aldrich), Di (2-ethylhexyl)phthalat (DOP) (80 g, 205 mmol, 10 Gewichts-%, Sigma-Aldrich), 2-Propylheptanol (996 g, 6,29 mol, BASF) und Tyzor TPT-20B (0,90 g, 0,05 Gewichts-%, abcr) befüllt. Unter einem milden Stickstoff-Strom wurde die Reaktionsmischung bis auf Rückfluss erhitzt (ca. 198 °C) und stetig die Temperatur erhöht, bis nach 4,5 Stunden eine Innentemperatur von 219 °C erreicht wurde und der Druck auf 620 mbar abgesenkt wurde. Danach wurde die Temperatur für weitere 4,5 Stunden konstant gehalten und der Druck stetig reduziert bis 480 mbar. Nach 9 Stunden Reaktionszeit war bereits kein DOA, kein DOP und auch kein DOTP mehr vorhanden. Um die restlichen Mengen der unterschiedlichen gemischten Ester umzusetzen, wurde die Reaktion für weitere 23 Stunden bei konstanter Temperatur fortgeführt, wobei der Druck immer weiter abgesenkt wurde bis er nach 13 Stunden schließlich 200 mbar erreicht hatte, danach wurde dieser auch für die verbleibenden 10 Stunden konstant gehalten. Zuletzt wurde das überschüssige 2-Propylheptanol abdestilliert, in dem der Druck noch bis 37 mbar abgesenkt wurde. Abschließend wurde eine Probe wurde mittels GC analysiert und die Performance des Produktgemisches in PVC untersucht. Edukte, Produkte und Umsatz nach GC-Flächen% sind in Tabelle 1 dargestellt, Angaben zur Performance des Produktgemisches in PVC finden sich nachstehend in den anwendungstechnischen Beispielen.

**Beispiel 2 (B2): Umesterung einer Mischung von Di(2-ethylhexyl)adipat (DOA) und Benzylbutylphthalat (BBP)**

Ein 2,5 L Reaktorkessel ausgestattet mit einer Kolonne und einer Destillatrückführung mittels Flüssigkeitsteiler zurück auf den Kolonnenkopf wurde mit Di (2-ethylhexyl)adipat (DOA) (630 g, 1,70 mol, 90 Gewichts-%, BASF), Benzylbutylphthalat (BBP) (70 g, 224 mmol, 10 Gewichts-%, Sigma-Aldrich), 2-Propylheptanol (913g, 5,77 mol, BASF) und Tyzor TPT-20B (0,81 g, 0,05 Gewichts-%, abcr) befüllt. Unter einem milden Stickstoff-Strom wurde die Reaktionsmischung bis auf Rückfluss erhitzt (ca. 199 °C) und stetig die Temperatur erhöht, bis nach drei Stunden eine Innentemperatur von 219 °C erreicht wurde und der Druck auf 580 mbar abgesengt wurde. Danach wurde die Temperatur für weitere vier Stunden konstant gehalten und der Druck stetig reduziert bis 380 mbar. Nach drei Stunden Reaktionszeit war bereits kein BBP mehr vorhanden, nach sieben Stunden kein DOA mehr. Um die restlichen Mengen der unterschiedlichen gemischten Ester umzusetzen, wurde die Reaktion weitere 23 Stunden bei konstanter Temperatur durchgeführt, wobei der Druck immer weiter abgesenkt wurde, bis er nach insgesamt 13 Stunden schließlich 200 mbar erreicht hatte, danach wurde dieser auch für die verbleibenden 10 Stunden konstant gehalten. Zuletzt wurde das überschüssige 2-Propylheptanol abdestilliert, in dem der Druck noch bis 10 mbar abgesenkt wurde. Abschließend wurde eine Probe wurde mittels GC analysiert. Edukte, Produkte und Umsatz nach GC-Flächen% sind in Tabelle 1 dargestellt.

**Beispiel 3 (B3): Umesterung einer Mischung von Di-(2-ethylhexyl)adipat (DOA), Diisononylphthalat (DINP) und Di-(2-Ethylhexyl)-terephthalat (DOTP**

Vorgehensweise wie bei Beispiel 2, außer dass 175 g Di (2-ethylhexyl)adipat (DOA) (0,472 mol, BASF), 175 g Diisononylphthalat (0,418 mol, BASF), 175 g Di (2-Ethylhexyl) terephthalat (0,448 mol, ) und 2-Propylheptanol (635 g, 4,01 mol, BASF) und Tyzor TPT-20B (0,81 g, 0,05 Gewichts-%, abcr) eingesetzt werden.

**Tabelle 1.**

| Beispiele. | | | | | |
|---|---|---|---|---|---|
| Beispiel Nr. | Start-Weichmacher (bzw. Gemisch) | Umgeesterter Weichmacher | Umsatz nach GC-Flächen% | | |
| | | | Start-Weichmacher | Mischester | Umgeesterter Weichmacher |
| VB1 | DOA | DPHA | 0 | 0,02 | 99,98 |
| VB2 | DOTP | DPHTP | 0 | 0,03 | 99,97 |
| B1 | 45 Gewichts-% DOTP | DPHTP | 0 | 0,03 | 46,2 |
| | 45 Gewichts-% DOA | DPHA | 0 | 0,03 | 43,7 |
| | 10 Gewichts-% DOP | DPHP | 0 | 0,02 | 10,0 |
| B2 | 90 Gewichts-% DOA | DPHA | 0 | 0,30 (2-propyl heptyl-2-ethylhexyl-Adipate) 0,04 (Benzyl-2-propylheptyl Adipat) 0,02 (2-propyl heptyl-2-ethylhexylPhthalat) | 87,02 |
| | 10 Gewichts-% BBP | DPHP | 0 | | 12,5 |
| B3 | 33 Gewichts-% DOTP | DPHTP | 0 | | 32,3 |
| | 33 Gewichts-% DOA | DPHA | 0 | | 28,1 |
| | 33 Gewichts-% DINP | DPHP | 0 | | 25,8 |

**Vergleichsbeispiel 3 (VB3): Umesterung von Dibutylphthalat (DBP)**

Ein 1,6 L Reaktorkessel ausgestattet mit einer Kolonne Wasserauskreiser wurde mit Dibutylphthalat (DBP) (278 g, 1,00 mol, 1,0 Äquivalente, SigmaAldrich), 2-Propylheptanol (396 g, 2,5 mol, 2,5 Äquivalente, BASF) und Tyzor TPT-20B (0,40 g, 0,035 Gewichts-%, abcr) befüllt. Unter einem milden Stickstoff-Strom wurde die Reaktionsmischung bis auf Rückfluss erhitzt (ca. 205 °C) und stetig die Temperatur erhöht, bis nach fünf Stunden eine Innentemperatur von 216 °C erreicht wurde. Innerhalb weiterer 6,5 Stunden wurde die Temperatur auf 244 °C angehoben und nach insgesamt 11,5 Stunden Reaktionszeit wurde die Umesterung beendet. Abschließend wurde eine Probe mittels GC analysiert. Edukte, Produkte und Umsatz nach GC-Flächen% sind in Tabelle 2 dargestellt.

**Vergleichsbeispiel 4 (VB4): Umesterung von Di-(2-ethylhexyl)adipat (DOA)**

Ein 1,6 L Reaktorkessel ausgestattet mit einer Kolonne Wasserauskreiser wurde mit Di (2-ethylhexyl)adipat (DOA) (500 g, 1,35 mol, 1,0 Äquivalente, BASF), 2-Propylheptanol (640 g, 4,04 mol, 3,0 Äquivalente, BASF) und Tyzor TPT-20B (0,57 g, 0,05 Gewichts-%, abcr) befüllt. Unter einem milden Stickstoff-Strom wurde die Reaktionsmischung bis auf Rückfluss erhitzt (ca. 216 °C) und stetig die Temperatur erhöht, bis nach fünf Stunden eine Innentemperatur von 224 °C erreicht wurde. Innerhalb weiterer sieben Stunden wurde die Temperatur auf 240 °C angehoben und nach insgesamt 12 Stunden Reaktionszeit wurde die Umesterung beendet. Abschließend wurde eine Probe mittels GC analysiert. Edukte, Produkte und Umsatz nach GC-Flächen% sind in Tabelle 2 dargestellt.

**Tabelle 2**

| Vergleichsbeispiele VB3 und VB4 | | | | | |
|---|---|---|---|---|---|
| Beispiel Nr. | Start-Weichmacher | Umgeesterter Weichmacher | Umsatz nach GC-Flächen% | | |
| | | | Start-Weichmacher | Mischester | Umgeesterter Weichmacher |
| VB3 | DBP | DPHP | 0,4 | 12,0 | 87,5 |
| VB4 | DOA | DPHA | 1,5 | 21,4 | 77,0 |

**Anwendungstechnische Prüfungen:**

**Methoden**

**II.a): Bestimmung der Lösetemperatur von Weichmacher-Zusammensetzungen**

Zur Bestimmung der Lösetemperatur von Weichmacher-Zusammensetzungen wurden etwa 10 Gramm einer Mischung nach folgender Rezeptur (siehe Tabelle 3) hergestellt. Die Mischung wurde mit einer Pipette aufgerührt und dann sofort ca. 30 Tropfen der homogenen Mischung auf das Platte-Platte-Messsystem gegeben.

**Tabelle 3**

| | phr |
|---|---|
| PVC, K-Wert 71, gesiebte Ware mit Sieb 100 µm (PVC Typ Vinoflex® S 7114) | 5 |
| Weichmacher(-Zusammensetzung) | 95 |
| Ba-Zn Stabilisator, Typ Baerostab UBZ 760 XLP RF | 2 |

**II.b): Bestimmung der Viskosität von Weichmacher-Zusammensetzungen**

Die Viskositätsmessungen wurden mit einem beheizbaren Oszillations- und Rotations-Rheometer MCR 302 von Anton Paar in einem Rotationsversuch durchgeführt.

| | |
|---|---|
| Messsystem: | Platte/Platte d=50 mm |
| Scherrate D: | 10 (1/s) |
| Spaltbreite: | 0,25 mm |
| Ausgangstemperatur: | 30 °C |
| Temperaturprofil: | 30 - 180 °C |
| Temperatursteigerung: | 5 °C/min |
| Wertaufzeichnung: | alle 3 s |

Die Messung erfolgte in zwei Rampen. Die erste Rampe für die Dauer von 120 s bei D=10 (1/s) und 30 °C dient zum Temperieren der Probe. Die zweite Rampe bei D=10 (1/s) und kontinuierlicher Temperatursteigerung von 5 °C min ist dann die eigentliche Messung. Der Abbruch erfolgte manuell, nachdem das Viskositätsmaximum überschritten war. Als Ergebnis der Messung wurde die Temperatur ermittelt, bei der das Maximum der Viskosität erreicht war. Diese

# EP 4 763 904 A1

Messungen wurden insgesamt viermal durchgeführt und der arithmetische Mittelwert aller vier Messungen als das Endergebnis gewertet.

**II.c) Herstellung und Prüfung von Weich-PVC-Folien hergestellt unter Einsatz von Weichmacher-Zusammensetzungen**

Rezeptur: siehe nachfolgende Tabelle 4.

**Tabelle 4**

| Bestandteile | Teile auf 100 Teile PVC (parts per hundred resin, phr) |
|---|---|
| PVC (Homopolymeres Suspensions-PVC, Markenname Inovyn® 271 PC) | 100 |
| Weichmacher-Zusammensetzung | 60 |
| Ba-Zn Stabilisator, Typ Baerostab® UBZ 760 XLP RF | 2 |

150 g PVC (Homopolymeres Suspensions-PVC, Markenname Inovyn® 271 PC), 90 g Weichmacher-Zusammensetzung und 3 g Ba/Zn-Stabilisator, Markenname Baerostab® UBZ 760 XLP RF, wurden mit einem Handmixer bei Raumtemperatur vermischt. Die Mischung wurde anschließend auf einem ölbeheizten Labormischwalzwerk (Fa. Collin, Automatikwalzwerk Typ W250M, Durchmesser: 252 mm, Breite: 450 mm) plastifiziert und zu einem Walzfell verarbeitet. Die Temperatur der beiden Walzen betrug jeweils 180 °C; die Drehzahlen lagen bei 15 Umdrehungen/min. (vordere Walze) und 12 Umdrehungen/min. (hintere Walze); die Walzzeit betrug 5 Minuten. Der Walzenspalt wurde auf 0,5 mm eingestellt. Man erhielt so ein Walzfell mit einer Dicke von 0,53 mm. Das abgekühlte Walzfell wurde anschließend bei einer Temperatur von 190 °C und einem Druck von 150 bar innerhalb von 180 s auf einer Presse vom Typ "Laborplattenpresse 400 P" der Fa. Collin zu einer Weich-PVC-Folie mit einer Dicke von 0,50 mm verpresst. Unter Beibehaltung des Pressdrucks wurde die Pressfolie innerhalb von 10 Minuten auf ca. 40 °C abgekühlt.

**II.d) Bestimmung der Shore A-Härte von Folien mit Weichmacher-Zusammensetzungen**

Die Messung erfolgte in Anlehnung an die DIN EN ISO 868, Okt. 2003: Aus den wie unter II.c) hergestellten Walzfolien wurden insgesamt 22 Stück 49 x 49 mm große Folien ausgestanzt. Hierzu war ein entsprechendes Stanzeisen zu verwenden um jeweils gleiche Foliengröße sicherzustellen. Diese wurden in einen Pressrahmen (Maße 400 x 400 mm; Dicke 10 mm) luftblasenfrei eingelegt, in dem sich insgesamt 16 Kavitäten zur Herstellung von Shore-A Probekörpern befanden. Jede Kavität hatte die Innenmaße von 50 x 50 mm. Nach dem Beschicken des Rahmens wurde zwischen zwei hochglanzpolierten verchromten Messing-Pressblechen 400 x 400 x 2 mm gepresst auf einer Presse vom Typ "Laborplattenpresse 400 P" der Fa. Collin. Die Prüfkörper wurden bei 185 °C und 200 bar für insgesamt 15 Minuten gepresst. Die abgekühlten Prüfkörper wurden nun vor der Messung 7 Tage in einem Klimaraum bei 23 °C und ca. 50% Feuchte konditioniert. Für die Messung der Shore-A-Härte wurde ein Durometer HDD-2 der Fa. Hildebrand verwendet. An einem Probekörper wurden 10 Messwerte nach 15 sec. Eindringzeit gemessen.

**II.e) Bestimmung der Folienflüchtigkeit von Folien mit Weichmacher-Zusammensetzungen**

Für die Bestimmung der Folienflüchtigkeit wurden aus den unter II.c) beschriebenen Pressfolien vier Einzelfolien (150 x 100 mm) ausgeschnitten, gelocht und gewogen. Die Folien wurden an einen rotierenden Stern in einen auf 130 °C eingestellten Heraeus-Trockenschrank Typ 5042 E gehängt. In dem Schrank wurde 18 mal pro Stunde die Luft gewechselt. Dies entsprach 800l/h Frischluft. Nach 24h in dem Schrank wurden die Folien entnommen und zurückgewogen. Der Gewichtsverlust in Prozent gab die Folienflüchtigkeit der Weichmacher-Zusammensetzungen an.

**II.f) Bestimmung der HCl-Reststabilität von Folien mit Weichmacher-Zusammensetzungen**

Die Bestimmung der HCl-Reststabilität erfolgte nach DIN EN 60811-405 (VDE 0473-811-405): Als Prüfgerät wurde ein Metallblock-Thermostat von Liebisch Labortechnik bei einer Prüftemperatur von 200 °C verwendet. Es wurde immer eine 3-fach Bestimmung vorgenommen. Ca. 50 mg der Walzfolien wurden abgewogen, auf 3 cm Länge zugeschnitten und im unteren Teil des Glasröhrchens positioniert. Am oberen Ende des Glasröhrchens wurde ein ca. 10 mm langer Indikatorpapierstreifen (Lackmuspapier) so positioniert, dass ca. 2 mm herausstanden. Die so präparierten Glasröhrchen wurden in den Metallblock positioniert und die Zeit notiert, bis ein Farbumschlag in Richtung Rot auftrat. Aus den drei Messwerten der drei Proben wurde der arithmetische Mittelwert gebildet.

**II.g) Bestimmung der Kältebruchtemperatur von Folien mit den offenbarungsgemäßen Weichmacher-Zusammensetzungen**

Die Prüfung der Kältebruchtemperatur erfolgte an Prüfkörpern, die aus den unter II.c) hergestellten Preßfolien erhalten wurden. Die Prüfung erfolgte in Anlehnung an den Entwurf der DIN 53372 von 1981. Maße und Anzahl der Prüfkörper waren entsprechend den Vorgaben der DIN-Vorschrift (Länge von 60 mm, Breite von 15 mm, Dicke exakt 0,50 mm). Die Prüfkörper mussten vor der Prüfung min. 4 Tage bei Raumtemperatur gelagert werden. Entscheidender Unterschied dieser Prüfkonstruktion im Unterschied zum Entwurf der DIN 53372 bestand darin, dass die Hämmer nicht in freiem senkrechtem Fall auf die Prüfkörperschlaufen auftrafen. Stattdessen waren die Hämmer auf einer Welle befestigt und fielen nach dem Auslösen der Schlaggewichte im Kreisbogen aus gleicher Höhe (= Abstand zum Prüfkörper) auf die Prüfschlaufen herab. Hierbei wurden jeweils sechs identische Prüfkörper in einer Reihe gleichzeitig geprüft. Die Kältetruhe wurde auf eine zu erwartende Starttemperatur eingestellt und der Probenträger (Bombe) mit den Prüfkörpern eingesetzt. Zur Konditionierung der Prüfkörper wurden diese pro Prüftemperatur 1 h temperiert. Zur Auswertung wurden nur diejenigen Probeschlaufen als defekt gewertet die ganz in zwei oder mehr Teile zerbrochen waren. Um die Kältebruchtemperatur zu ermitteln, mussten mindestens eine 6er-Reihe Prüflinge als komplett zerbrochen, sowie eine 6er-Reihe als komplett erhalten bewertet werden. Das Temperaturintervall der durchzuführenden Prüfungen betrug jeweils 5 °C. Die Berechnung der Kältebruchtemperatur erfolgte gemäß der Formel im Entwurf der DIN-Norm 53372 (1981).

**II.h) Bestimmung der Zugprüfeigenschaften von Folien mit Weichmacher-Zusammensetzungen**

Diese Prüfung diente der Ermittlung der Parameter Bruchdehnung, Bruchspannung und 100% Modul. Dazu wurden auf der Zugprüfmaschine Zwick / Z 2.5 Probekörper Typ 2 nach DIN EN ISO 527-3 gemessen. Die Probekörper waren 150mm lang, 15mm breit und ca. 0,50 mm dick. Die Probekörper wurden mit Hilfe eines Stanzeisens aus den unter II.c) beschriebenen Pressfolien ausgestanzt. Vor der Prüfung wurden die Prüfkörper 7 Tage im Klimaraum unter Normalklima konditioniert. Dabei war zu beachten, dass zwischen Herstellung der Pressfolien und Durchführung der Zugprüfung genau 7 Tage vergingen. Die Konditionierung erfolgten bei 23 °C +/- 1,0 °C und 50% +/- 5 R.H. gemäß DIN EN ISO 291. Die Zugprüfungen erfolgten gemäß DIN EN ISO 527, Teil 1-3. Jede Messung bestand aus der Prüfung von 10 einzelnen Probekörpern. Die Messlänge von 100 mm ergab sich aus der freien Einspannlänge des Probekörpers zwischen den Klemmbacken. Die Prüfgeschwindigkeit betrug 100 mm/min. Innerhalb der Messlänge wurde die Durchschnittsdicke aus 5 Einzelwerten ermittelt. Die Messung der Dehnung und des 100% Moduls erfolgte über die Änderung des Traversenweges.

**Beispiel 3: Eigenschaften von Weichmachergemischen und von daraus erzeugten Folien**

*3a. Weichmacher bzw. Weichmachergemische*

Das erhaltene Produktgemisch aus Beispiel 1 (B1) wurde auf seine Eigenschaften untersucht, wobei die Lösetempteratur gemäß II.a) wie oben beschreiben bestimmt wurde. Die Viskosität wurde gemäß DIN 51562-1, 01/99 mit einer Vorrichtung gemäß II.b) wie oben beschrieben, bestimmt. Zum Vergleich wurden ebenfalls reines Di-2-Propylheptylphthalat (DPHP), reines Di-2-Propylheptyladipat (DPHA), sowie eine Mischung aus DPHP, DPHA und Di-2-Propylheptylterephthalat (DPTP) auf ihre Eigenschaften untersucht, wobei die Ergebnisse nachfolgend in Tabelle 5 dargestellt sind:

**Tabelle 5**

| Eigenschaften des Produktgemisches aus Beispiel 1 (B1) | | | | | |
|---|---|---|---|---|---|
| Produkteigenschaft | Methode | Di-2-Propylheptylphthalat (DPHP, Palatinol 10P)* | Di-2-Propylheptyladipat (DPHA, Synative ES DPHA)* | B1 | Weichmachermischung 1:1:1 DPHP: DPHA: DPTP ** |
| Dichte, 20 °C, [g/cm$^3$] | DIN 51757 Verf. 4, 01/11 | 0,9618 | 0,9121 | 0,9394 | 0,9475 |
| Viskosität, 20 °C [mPa s] | DIN 51562-1, 01/99 (Vorrichtung gemäß II.b) | 118 | 22 | 53 | 62 |
| Brechzahl, $n_D^{20}$ | DIN 51423-2, 02/10 | 1,4835 | 1,4496 | 1,4698 | 1,4772 |
| Säurezahl, [mg KOH/g] | DIN EN ISO 2114, 06/02 | 0,023 | 0,009 | 0,074 | 0,66 |
| Wassergehalt [Gewichts-%] | DIN 51777-1, 03/83 | 0,036 | 0,038 | 0,01 | 0,033 |
| Lösetemperatur [°C] | Methode gemäß II.a) | 137 | 156 | 155 | 151 |
| *: kommerziell erhältliche reine Verbindung zum Vergleich<br>**: zum Vergleich hergestellte Mischung | | | | | |

*3b. PVC-Folien enthaltend Weichmacher bzw. Weichmachergemische*

Die Ergebnisse der anwendungstechnischen Prüfungen von unter Einsatz der Weichmachermischung aus Beispiel 1 (B1) erhaltenen Folien, hergestellt gemäß II.c) und zum Vergleich von Folien, die unter Einsatz von reinem Di-2-Propylheptylphthalat (DPHP), reinem Di-2-Propylheptyladipat (DPHA), sowie einer Mischung aus DPHP, DPHA und Di-2-Propylheptylterephthalat (DPTP), hergestellt, und gemäß den unter II.d) bis II.i) oben beschriebenen Methoden untersucht wurden, sind in Tabelle 6 gezeigt:

**Tabelle 6**

| Eigenschaften von PVC-Folie, hergestellt mit der Weichmachermischung aus Beispiel 1 (B1) und Vergleichsweichmachern | | | | | |
|---|---|---|---|---|---|
| | | Weichmacher(mischung) | | | |
| Produkteigenschaft | Methode | Di-2-Propylheptylphthalat (DPHP, Palatinol 10P)* | Di-2-Propylheptyladipat (DPHA, Synative ES DPHA)* | B1 | Weichmachermischung 1:1:1 DPHP: DPHA: DPTP * |
| Reißfestigkeit [MPa] | DIN EN ISO 527, Teil 1+3 | 18,6 | 16,9 | 16,9 | 17,4 |
| Reißdehnung [%] | DIN EN ISO 527, Teil 1+3 | 331 | 328 | 308 | 321 |
| Spannungswert bei 100% Dehnung [MPa] | DIN EN ISO 527, Teil 1+3 | 8,9 | 7,2 | 8,9 | 8,6 |
| Shore A, 15 Sek | DIN EN ISO 868 | 81 | 83 | 86 | 83 |
| Kältebruchtemperatur [°C] | BASF-Methode | -32,5 | -61 | -50,8 | -47,5 |
| Folienflüchtigkeit [%] | BASF-Methode | 1,13 | 2,28 | 1,35 | 1,35 |
| HCl-Reststabilität [min] | DIN EN 60811-3-2 | 19 | 18,3 | 18 | 18 |
| *: Vergleichsweichmacher bzw. -mischung | | | | | |

**Patentansprüche**

1. Verfahren zur Umesterung einer Weichmachermischung umfassend:

   (a) Bereitstellen einer ersten Mischung von Weichmachern (M1), umfassend einen Phthalsäure-basierten Weichmacher und mindestens einen Weichmacher, der auf einer von Phthalsäure unterschiedlichen Säure basiert;
   (b) Bereitstellen eines Alkohols $C_nH_{2n+1}OH$ (A), wobei n ein Integer aus dem Bereich von 9 bis 15 ist;

      (i) Kontaktieren der Mischung von Weichmachern M1 gemäß (a) mit dem Alkohol A gemäß (b) in Gegenwart eines Umesterungskatalysators unter Bedingungen, die eine Umesterung der in der Mischung M1 enthalten Weichmacher erlauben, unter Erhalt einer zweiten Mischung von Weichmachern (M2), wobei die Zusammensetzung von M2 und die Zusammensetzung von M1 unterschiedlich sind.

2. Verfahren gemäß Anspruch 1, wobei die von Phthalsäure unterschiedliche Säure ausgewählt ist aus der Gruppe bestehend aus Adipinsäure, Terephthalsäure, 1,2-Cyclohexandicarbonsäure, 1,4-Cyclohexandicarbonsäure, Benzoesäure, Dibenzoesäure, Zitronensäure, Fettsäure, epoxidierte Fettsäure und Mischungen von zwei oder mehr dieser Säuren, wobei die Fettsäure bzw. epoxidierte Fettsäure bevorzugt ausgewählt aus der Gruppe bestehend aus Palmitinsäure, epoxidierter Palmitinsäure, Stearinsäure, epoxidierter Stearinsäure, Ölsäure, epoxidierter Ölsäure, Linolsäure, epoxidierter Linolsäure, Linolensäure, epoxidierter Linolensäure, Palmitoleinsäure, epoxidierter Palmitoleinsäure, Arachidinsäure, epoxidierter Arachidinsäure, und Mischungen von zwei oder mehr dieser Säuren.

3. Verfahren gemäß Anspruch 1 oder 2, wobei die erste Mischung von Weichmachern (M1) erhalten oder erhältlich ist aus einer Extraktion eines polymeren Materials mit einem Lösungsmittel, wobei das polymere Material ein Polymer, einen Phthalsäure-basierten Weichmacher und mindestens einen Weichmacher, der auf einer von Phthalsäure unterschiedlichen Säure basiert, umfasst, wobei das zur Extraktion eingesetzte oder einsetzbare Lösungsmittel bevorzugt ein Lösungsmittel ausgewählt aus der Gruppe bestehend aus C5 bis C10 cyclischer Carbonsäureester (Lacton), C3 bis C10 Keton, und Mischungen von zwei oder mehr dieser Verbindungen umfasst.

4. Verfahren gemäß einer der Ansprüche 1 bis 3, wobei der Umesterungskatalysator einen Lewis-Säure-Umesterungskatalysator und/oder einen Brönstedt-Säure-Umesterungskatalysator umfasst, bevorzugt einen Umesterungskatalysator ausgewählt ist aus der Gruppe bestehend aus Schwefelsäure, para-Toluolsulfonsäure, Titan basiertem Umesterungskatalysator, und Mischungen von zwei oder mehr davon, wobei der Titan basiertem Umesterungskatalysator bevorzugt ausgewählt ist aus der Gruppe bestehend aus Tetra-iso-propyltitanat, Tetra-n-butyltitanat und Mischungen von Tetra-iso-propyltitanat und Tetra-n-butyltitanat.

5. Verfahren nach einer der Ansprüche 1 bis 4, wobei die zweite Mischung von Weichmachern M2 Ester des Alkohols A mit Phthalsäure und Ester des Alkohols A mit der von Phthalsäure unterschiedlichen Säure umfasst, bevorzugt Ester, in welchen alle Säuregruppen der Phthalsäure mit Alkohol A verestert sind und Ester, in welchen alle Säuregruppen der von Phthalsäure unterschiedlichen Säure mit Alkohol A verestert sind, weiter bevorzugt bestehen mindestens 90 Gewichts-%, weiter bevorzugt mindestens 95 Gewichts-% der Mischung M2 aus Estern, in welchen alle Säuregruppen der Phthalsäure mit Alkohol A verestert sind und Estern, in welchen alle Säuregruppen der von Phthalsäure unterschiedlichen Säure mit Alkohol A verestert sind.

6. Verfahren nach einer der Ansprüche 1 bis 5, wobei die Mischung von Weichmachern (M1) bzw. die gemäß (i.1) erzeugte Reaktionsmischung als Weichmacher, der auf einer von Phthalsäure unterschiedlichen Säure basiert, mindestens epoxidiertes Sojabohnenöl (ESBO) und/oder epoxidiertes Leinsamenöl (ELO) umfasst; und/oder, bevorzugt und, wobei die zweite Mischung von Weichmachern (M2) Ester des Alkohols A mit Phthalsäure, und mindestens einen Ester des Alkohols A mit epoxidierter Linolsäure umfasst.

7. Kombinierter Prozess umfassend:

(A) Weichmacherextraktion aus einem polymeren Material unter Erhalt einer Mischung von Weichmachern (M1), umfassend einen Phthalsäure-basierten Weichmacher und mindestens einen Weichmacher, der auf einer von Phthalsäure unterschiedlichen Säure basiert; (B) Umesterung der aus (A) erhaltenen Mischung von Weichmachern (M1), wobei (A) umfasst:

(A.a) Bereitstellen eines polymeren Materials, das ein Polymer, einen Phthalsäure-basierten Weichmacher und mindestens einen Weichmacher, der auf einer von Phthalsäure unterschiedlichen Säure basiert, umfasst, und Bereitstellen eines Lösungsmittels; (A.i) Kontaktieren des polymeren Materials mit dem Lösungsmittel, wodurch eine flüssige Mischung erhalten wird, welche das Lösungsmittel, gelöstes Polymer und die Weichmacher umfasst; (A.ii) Ausfällen des Polymers aus der flüssigen Mischung aus (A.i) durch Zusatz eines Anti-Lösungsmittels, unter Erhalt einer flüssigen Phase, die Lösungsmittel, Anti-Lösungsmittel und Weichmacher enthält, und eines festen Rückstandes, der das Polymer enthält; (A.iii) Separation von festem Rückstand und flüssiger Phase; (A.iv) Separation von Lösungsmittel, Anti-Lösungsmittel und Weichmachern durch Destillation, wodurch eine vorzugsweise flüssige Mischung (M1) erhalten wird, die den Phthalsäure-basierten Weichmacher und den mindestens einen Weichmacher, der auf einer von Phthalsäure unterschiedlichen Säure basiert, umfasst, und eine oder mehrere flüssige Fraktionen, die das Lösungsmittel und/oder das Anti-Lösungsmittel umfassen;

wobei (B) umfasst:

(B.i) Kontaktieren der aus (A.iv) erhaltenen Mischung von Weichmachern M1 mit einem Alkohol $C_nH_{2n+1}OH$ (A), wobei n ein Integer aus dem Bereich von 9 bis 15 ist, in Gegenwart eines Umesterungskatalysators unter Bedingungen, die eine Umesterung der in der Mischung von Weichmachern enthaltenen Weichmacher erlauben, unter Erhalt einer zweiten Mischung von Weichmachern (M2), wobei die Zusammensetzung von M2 von der von M1 unterschiedlich ist.

8. Prozess nach Anspruch 7, wobei das Lösungsmittel gemäß (A.a) ausgewählt aus der Gruppe bestehend aus C5 bis C10 cyclischer Carbonsäureester (Lacton), C3 bis C10 Keton und Mischungen von zwei oder mehr dieser Verbindungen.

9. Prozess nach Anspruch 7 oder 8, wobei das Polymer des polymeren Materials gemäß (A.a) ein thermoplastisches Polymer umfasst oder ist, bevorzugt ausgewählt aus der Gruppe bestehend aus

- thermoplastischem Copolymer, welches in polymerisierter Form mindestens zwei verschiedene Monomere umfasst, wobei die Monomere ausgewählt sind aus der Gruppe bestehend aus C2- bis C10-Monoolefin (vorzugsweise ausgewählt aus der Gruppe bestehend aus Ethylen, Propylen, 1,3-Butadien, 2-Chlor-1,3-butadien und Mischungen aus zwei oder mehr dieser Olefine), Vinylalkohol, C2 bis C10-Alkylester des Vinylalkohols, Vinylacetat, Vinylchlorid, Vinylidenchlorid, Vinylidenfluorid, Tetrafluorethylen, Glycidylacrylat, Glycidylmethacrylat, Acrylat mit Alkoholkomponente von verzweigtem oder unverzweigtem C1 bis C10 Alkoholmethacrylat mit Alkoholbestandteilen von verzweigtem oder unverzweigtem C1 bis C10 Alkohol, aromatisches Vinyl (vorzugsweise Styrol), (Meth)acrylnitril, ethylenisch ungesättigte Mono- oder Dicarbonsäure und Maleinsäureanhydrid (TP.1);
- Polyvinylester (TP.2);
- Polycarbonat (TP.3);
- Polyether (TP.4);
- Polyetherketon (TP.5);
- thermoplastisches Polyurethan (TP.6);
- Polysulfid (TP.7);
- Polysulfon (TP.8);
- Polyester (TP.9);
- Polyalkylenterephthalat (TP.10);
- Polyhydroxyalkanoat (TP.11);
- Polybutylensuccinat (TP.12);
- Polybutylensuccinatadipat (TP.13);
- Polyacrylat mit gleichen oder unterschiedlichen Alkoholrückständen aus der Gruppe der C4- bis C8-Alkohole, vorzugsweise ausgewählt aus Butanol, Hexanol, Octanol und 2-Ethylhexanol (TP.14);
- Polymethylmethacrylat (TP.15);
- Methylmethacrylat-Butylacrylat-Copolymer (TP.16);
- Acrylnitril-Butadien-Styrol-Copolymer (TP.17);
- Ethylen-Propylen-Copolymer (TP.18);
- Ethylen-Propylen-Dien-Copolymer (TP.19);
- Polystyrol (TP.20);
- Styrol-Acrylnitril-Copolymer (TP.21);
- Acrylnitril-Styrol-Acrylat (TP.22);
- Styrol-Butadien-Methylmethacrylat-Copolymer (TP.23);
- Styrol-Maleinsäureanhydrid-Copolymer (TP.24);
- Styrol-Methacrylsäure-Copolymer (TP.25);
- Polyoxymethylen (TP.26);
- Polyvinylalkohol (TP.27);
- Polyvinylacetat (TP.28);
- Polyvinylbutyral (TP.29);
- Polyvinylchlorid (TP.30);
- Polycaprolacton (TP.31);
- Polyhydroxybuttersäure (TP.32);
- Polyhydroxyvaleriansäure (TP.33);
- Polymilchsäure (TP.34);
- Ethylcellulose (TP.35);
- Celluloseacetat (TP.36);

- Cellulosepropionat (TP.37);
- Celluloseacetat/Butyrat (TP.38)

und Mischungen aus zwei oder mehr dieser Polymere.

10. Mischung aus Estern eines Alkohols $C_nH_{2n+1}OH$ (A), wobei n ein Integer aus dem Bereich von 9 bis 15 ist, mit Phthalsäure und Estern des Alkohols A mit einer von Phthalsäure unterschiedlichen Säure, bevorzugt erhalten oder erhältlich aus einem Verfahren gemäß einer der Ansprüche 1 bis 6 und/oder bevorzugt erhalten oder erhältlich aus einem Prozess gemäß einer der Ansprüche 7 bis 9.

11. Verwendung der Mischung gemäß Anspruch 10 als Weichmacher in der Herstellung polymerer Materialien, wobei das polymere Material bevorzugt ausgewählt ist aus der Gruppe bestehend aus geformtem Körper, Handschuh, Folie, Tapete, Bodenbelag und Textil.

12. Methode zur Herstellung eines Weichmacher enthaltenden polymeren Materials umfassend:

(I) Bereitstellen eines Polymers und einer Mischung gemäß Anspruch 10;
(II) Vermischen von gemäß (I) bereitgestelltem Polymer und bereitgestellter Mischung unter Erhalt einer Verarbeitungsmischung V;
(III) Verarbeiten von V mittels Kalandrieren, Extrusion und/oder Spritzguss.

13. Methode zur Herstellung eines Weichmacher enthaltenden Plastisols umfassend:

(I) Bereitstellen eines Polymers und einer Mischung gemäß Anspruch 10;
(II) Vermischen von gemäß (I) bereitgestelltem Polymer und bereitgestellter Mischung unter Erhalt einer Verarbeitungsmischung V;
(III) Verarbeiten von V mittels Streichen, Rakeln, Tauchen und/oder Rotationsspritzguß.

14. Polymeres Material enthaltend ein Polymer und eine Mischung gemäß Anspruch 10 als Weichmacher, vorzugweise erhalten oder erhältlich aus der Methode gemäß Anspruch 12.

15. Plastisol enthaltend ein Polymer und eine Mischung gemäß Anspruch 10 als Weichmacher, vorzugweise erhalten oder erhältlich aus der Methode gemäß Anspruch 13.

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 368 669 A1 (DAINIPPON INK & CHEMICALS [JP]) 15. Mai 2024 (2024-05-15)<br>* Zusammenfassung; Ansprüche 1,3,6-9; Beispiele 3-8; Tabellen 1,2 *<br>* Vergleichsbeispiele 2,4,5,6; Absätze [0061], [0071] - [0074] *<br>----- | 10-15 | INV.<br>C08K5/00<br>C08K5/101<br>C08K5/12<br>C08J3/18<br>C08J5/00<br>C08J11/00<br>A41D19/00 |
| X | CN 118 852 810 A (ZHEJIANG WANMA CO LTD; ZHEJIANG WANMA CABLE CO LTD ET AL.) 29. Oktober 2024 (2024-10-29)<br>* Zusammenfassung; Ansprüche 1,2,3 *<br>----- | 10-15 | |
| A | BOARETTI CARLO ET AL: "Transesterification of Bis(2-Ethylhexyl) Phthalate for the Recycling of Flexible Polyvinyl Chloride Scraps in the Circular Economy Framework", INDUSTRIAL & ENGINEERING CHEMISTRY RESEARCH, Bd. 60, Nr. 48, 29. November 2021 (2021-11-29), Seiten 17750-17760, XP093273558, ISSN: 0888-5885, DOI: 10.1021/acs.iecr.1c03639<br>* Zusammenfassung *<br>* Seite 17751, linke Spalte *<br>----- | 1-15 | |
| X | US 2024/227246 A1 (AZIN GONDIM PAIVA MAYARA [FR] ET AL) 11. Juli 2024 (2024-07-11)<br>* Zusammenfassung; Abbildung 7 *<br>* Absätze [0100], [0101], [0105], [0114], [0117], [0131], [0139], [0141] *<br>----- | 1,4,5,10 | |

RECHERCHIERTE SACHGEBIETE (IPC)

C08K
C08J
A44C
A41D

Der vorliegende Recherchenbericht wurde für alle Patentansprüche erstellt

| Recherchenort | Abschlußdatum der Recherche | Prüfer |
|---|---|---|
| München | 30. April 2025 | Schütte, Maya |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

`EP 24 22 2341`

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

`30-04-2025`

| Im Recherchenbericht angeführtes Patentdokument | Datum der Veröffentlichung | Mitglied(er) der Patentfamilie | Datum der Veröffentlichung |
|---|---|---|---|
| EP 4368669 A1 | 15-05-2024 | CN 117460780 A | 26-01-2024 |
| | | EP 4368669 A1 | 15-05-2024 |
| | | JP 7384324 B2 | 21-11-2023 |
| | | JP WO2023281945 A1 | 12-01-2023 |
| | | US 2024309177 A1 | 19-09-2024 |
| | | WO 2023281945 A1 | 12-01-2023 |
| CN 118852810 A | 29-10-2024 | KEINE | |
| US 2024227246 A1 | 11-07-2024 | AU 2022279334 A1 | 12-10-2023 |
| | | BR 112023020608 A2 | 05-12-2023 |
| | | CA 3213701 A1 | 24-11-2022 |
| | | CN 117355565 A | 05-01-2024 |
| | | CO 2023015456 A2 | 29-12-2023 |
| | | EP 4341331 A1 | 27-03-2024 |
| | | FR 3123069 A1 | 25-11-2022 |
| | | JP 2024518622 A | 01-05-2024 |
| | | KR 20240010497 A | 23-01-2024 |
| | | TW 202307104 A | 16-02-2023 |
| | | US 2024227246 A1 | 11-07-2024 |
| | | WO 2022243042 A1 | 24-11-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2024133395 A1
- WO 2022243042 A1
- WO 2022243043 A1
- WO 2024104887 A1
- WO 9514647 A
- WO 9514647 A1
- US 2921089 A
- US 5288918 A
- WO 05028407 A1
- WO 0283695 A
- EP 0366089 A
- US 4426524 A
- US 5434313 A

**In der Beschreibung aufgeführte Nicht-Patentliteratur**

- **S. WAGNER** ; **M. SCHLUMMER**. *Resources, Conservation & Recycling*, 2024, vol. 211, 107889
- **WEISERMEL, ARPE**. Industrielle Organische Chemie. Wiley-VCH, 1998, 96
- Ullmann's Encyclopedia of Industrial Chemistry. VCH Verlagsgesellschaft GmbH, 1995, vol. 5, 291-292
- Ullmann's Encyclopedia of Industrial Chemistry. VCH Verlagsgesellschaft GmbH, 1985, vol. 5, 293
- *CHEMICAL ABSTRACTS*, 39389-20-3
- ULLMANN'S Encyclopedia of Industrial Chemistry. Wiley-VCH Verlag GmbH & Co. KGaA, 2012, vol. 33, 619-688